(19) **Europäisches Patentamt**
**European Patent Office**
**Office européen des brevets**

(11) **EP 2 027 926 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(51) Int Cl.:
***G01N 35/04*** *(2006.01)* ***B01L 9/06*** *(2006.01)*
***G01N 35/00*** *(2006.01)*

(21) Anmeldenummer: **07016283.9**

(22) Anmeldetag: **20.08.2007**

(54) **Apparat zum Prozessieren von biologischem Material**

Apparatus for processing biological material

Appareil de fonctionnement de matériel biologique

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**25.02.2009 Patentblatt 2009/09**

(73) Patentinhaber: **Qiagen GmbH**
**40724 Hilden (DE)**

(72) Erfinder:
• **Lips, Georg**
**8640 Rapperswil (CH)**

• **Friederichs, Ulf**
**8712 Stäfa (CH)**

(74) Vertreter: **Zimmermann & Partner**
**Patentanwälte mbB**
**Postfach 330 920**
**80069 München (DE)**

(56) Entgegenhaltungen:
**EP-A- 1 243 892 EP-A2- 1 288 635**
**WO-A-2007/039524 GB-A- 1 352 050**

**Beschreibung**

Ausführungsformen der Erfindung betreffen eine Aufnahmevorrichtung zur Aufnahme von Material für die Prozessierung, Aufreinigung und/oder Analyse von biologischen Zielmolekülen, und ein Verfahren zum Inventarisieren, zur Lagebestimmung und/oder zur Ausrichtungsbestimmung von Aufnahmevorrichtungen, die zum automatisierten Prozessieren eines Materials, das biologische Zielmoleküle enthält, auf einem entsprechenden Apparat eingesetzt werden. Ausführungsformen der vorliegenden Erfindung betreffen auch einen Apparat zur Aufreinigung bzw. Prozessierung und/oder Analyse von biologischen Zielmolekülen, mit einer Erfassungseinrichtung zum Erfassen mindestens einer solchen Aufnahmevorrichtung.

Es ist heute vielfach gewünscht, zur Isolierung und weiteren Prozessierung bzw. Analytik von biologischen Zielmolekülen, wie beispielweise Nukleinsäuren und Proteinen, automatisierte Verfahren zu verwenden. Dies hat viele Vorteile, so zum Beispiel das Ermöglichen eines hohen Probendurchsatzes, identische Verfahrensbedingungen bei jeder Isolierung/Prozessierung, die einen direkten Vergleich der Ergebnisse der Prozessergebnisse ermöglichen, Zeitersparnis, eine geringere Gefahr für die Mitarbeiter, mit potentiell die Gesundheit gefährdenden Substanzen, die bei derartigen Prozessen häufig verwendet werden, in Kontakt zu kommen, etc. Um einen reibungslosen Ablauf der Prozesse auf dem Gerät gewährleisten zu können, muss nicht nur sichergestellt werden, dass die benötigten Verbrauchsmaterialien und Chemikalien sich vor Initiierung des Prozesses auf dem Gerät befinden, sondern auch, dass sich die richtigen Materialien an der richtigen Stelle, in der richtigen Ausrichtung, in der richtigen Menge und in richtigem Zustand, z.B. geöffnet, auf dem Gerät befinden.

Bei vielen Geräten auf dem Markt obliegt es dem Anwender sicherzustellen, dass diese Voraussetzungen erfüllt sind. Dass diese Voraussetzungen nicht erfüllt waren, wird häufig erst festgestellt, wenn es im Verlauf der Prozesse zu Problemen kommt, die den Verlust von Proben, Zeit und Gebrauchsmaterialien und im schlimmsten Fall sogar eine Beschädigung des Gerätes zur Folge haben können.

Es wird daher bei einigen Geräten auf dem Markt bereits versucht, diese Aufgaben dem Anwender abzunehmen und automatisiert durchzuführen.

So ist es im Stand der Technik bislang bekannt, über eine optische Bilderkennung Prozessgefäße in einem Prozessraum für biologisches Material zu erkennen. Ein Algorithmus versucht dabei, aus einem aufgenommenen optischen Bild Ränder der Prozessgefäße zu erkennen und die Art der Prozessgefäße aus den Rändern zu ermitteln. Diese Bilderkennung funktioniert allerdings nur zuverlässig, wenn ein ausreichender optischer Kontrast zwischen dem Prozessgefäß und einem Arbeitstisch besteht. WO2007/039524 beschreibt eine Pipettenspitzenstation mit Markierungen, welche als hervorstehende Elemente ausgebildet sind, deren Vorhandensein oder Fehlen durch einen optischen Sensor detektiert werden kann. EP 1 288 635 A2 betrifft eine Vorrichtung zur Behandlung von Flüssigkeiten. Mit der Vorrichtung kann eine Flüssigkeitsoberfläche in einem Gefäß erfasst werden.

Weiter ist bekannt, zur Prozessüberwachung eine Anwesenheit einer Einweg- Pipettenspitze (Disposable Tip) über eine Aufnahme der Pipettenspitze und Kraftmessung zu erfassen. Dabei erfolgt in einem Rack für Pipettenspitzen an einer ersten Position eine Aufnahme der Pipettenspitze. Wenn diese fehlschlägt, wird eine nächste Position angefahren und dieser Vorgang wird wiederholt, bis eine korrekte Pipettenspitzenaufnahme erfolgt ist. Daraus wird dann geschlossen, dass alle weiteren Positionen ebenfalls befüllt sind. Die aufgenommene Pipettenspitze wird anschließend in einem Abfallbehälter abgeworfen. Dieser Prozess muss für jeden Rack für Pipettenspitzen wiederholt werden. Die Position der Pipettenspitzen ist fest in einer Software für die Prozessüberwachung einprogrammiert.

Es ist auch bekannt, über eine Kraftmessung, vorzugsweise indirekt über die Leistungsaufnahme des Aktors des Greifers, durch einen Greifer die Anwesenheit von Prozessgefäßen zu bestimmen. Dabei ist eine Größe und Position der Prozessgefäße fest in einer Software einprogrammiert. Durch fest vorgegebene Reihenfolgen von Greifvorgängen kann die korrekte Größe und Position bestimmt werden. Diese Bestimmung ist jedoch unter Umständen nicht ausreichend zuverlässig, präzise und / oder schnell.

Aufgabe der Erfindung ist es daher, einen Apparat zur Aufreinigung bzw. Prozessierung und/oder Analyse von biologischen Zielmolekülen derart weiterzuentwickeln, dass er die Nachteile des Stands der Technik überwindet. Insbesondere ist es wünschenswert, um einen sicheren Ablauf eines Prozesses auf dem Gerät zu gewährleisten, auf dem Gerät befindliche Objekte, etwa Aufnahmevorrichtungen und Verbrauchsmaterialien wie zum Beispiel Prozessgefäße, Einweg-Pipettenspitzen (Disposable Tips), Vorratsgefäße, Abfallbehälter, Gefäße für Verbrauchsmaterialien etc., zu inventarisieren und mit dem geplanten Prozess und den dafür notwendigen Verbrauchsmaterialien abzugleichen. Um Benutzerfehler auszuschließen, sollte diese Inventarisierung automatisch erfolgen.

Eine weitere Aufgabe der Erfindung besteht daher darin, ein entsprechendes Verfahren bereitzustellen. Ferner soll die Prozesskontrolle verbessert werden, etwa durch eine verbesserte Überwachung von zum Gerät gehörenden oder separaten beweglichen Teilen, die Erfassung der Anwesenheit und/oder der Position auf dem Gerät befindlicher Objekte, insbesondere von Schubladen (Position und Ausrichtung) oder von Aufnahmevorrichtungen.

Diese Aufgabe wird gelöst durch einen Apparat zur Aufreinigung bzw. Prozessierung und/oder Analyse von biologischen Zielmolekülen mit mindestens einer hierin beschriebenen Aufnahmevorrichtung zur Aufnahme von Material für die Aufreinigung, Prozessierung, und/oder Analyse der biologischen Zielmoleküle. Der Apparat umfasst eine Erfassungseinrichtung zum Erfassen der mindestens einen hierin beschriebenen Aufnahmevorrichtung. Die Erfassungseinrichtung ist jeweils eingerichtet, um mindestens einen Höhenwert mindestens eines Identifikationselements der Aufnahmevorrichtung zu erfassen und um aus dem mindestens einen Höhenwert eine Raumposition und/oder eine Ausrichtung und/oder eine Art und/oder die Anwesenheit und/oder die Anzahl und/oder den Zustand der mindestens einen Aufnahmevorrichtung zu ermitteln.

Unter einer Höhe wird generell ein Abstand zu einer Referenzhöhe verstanden, wobei die Referenzhöhe etwa durch die Position der Erfassungseinrichtung definiert sein kann, aber auch etwa durch eine Auflagefläche des Objekts. Vorzugsweise handelt es sich bei der Höhe um einen vertikalen Abstand. Die Höhe kann auch als Abstand in einer Richtung, die zu einer Auflagefläche des Objekts orthogonal ist, definiert sein, oder gegebenenfalls als Abstand in Richtung einer Aufnahmeöffnung des Objekts (etwa einer Aufnahmevorrichtung). Typischerweise wird durch den Apparat eine Arbeitsebene definiert, und die Höhe ist dann in der Regel ein Abstand in der zu dieser Arbeitsebene senkrechten Richtung. Die Referenzhöhe kann auch als die Höhe der Arbeitsebene oder der Erfassungseinrichtung oder eines Teiles derselben verstanden werden.

Beispielsweise ist es zur Ermittlung der Höhe gegenüber einer Referenzhöhe denkbar, dass der Erfassungseinrichtung ihre genaue Position bekannt ist, so dass aus einer einfachen Entfernungsmessung zwischen dem Detektionsbereich und der Erfassungseinrichtung der Höhenwert folgen kann. Auch ist es denkbar, dass die Erfassungseinrichtung eine Messung ihres Abstands zu der Referenzebene, etwa zu einem Arbeitstisch, vornimmt, und anschließend die Höhe des Detektionsbereichs bestimmt, indem die Differenz zwischen dem Abstand zu dem Detektionsbereich und dem Abstand zu der Referenzebene gebildet wird. Mit dem erfindungsgemäßen Apparat ist es möglich, mit nur einer Erfassungseinrichtung, umfassend einen Sensor, Parameter zu erfassen, die für mehrere Zwecke verwendet werden können wie der Bestimmung der Raumposition, der Ausrichtung, der Anwesenheit, des Zustandes, der Anzahl und/oder der Art des Objekts. Mit Zustand ist beispielsweise gemeint, dass das Objekt offen oder geschlossen vorliegt.

Obwohl es besonders vorteilhaft ist, dass zur Bestimmung der Raumposition, der Ausrichtung, der Anwesenheit, des Zustandes, der Anzahl und/oder der Art des Objekts generell die Verwendung nur einer Erfassungseinrichtung ausreicht, ist es ebenso möglich, auch mehrere Erfassungseinrichtungen in dem Apparat zu verwenden, wenn dies gewünscht wird. Die nachfolgend beschriebenen Eigenschaften der Erfassungseinrichtung können dabei sowohl bei nur einer der Erfassungseinrichtungen als auch bei mehreren Erfassungseinrichtungen vollständig oder teilweise vorliegen.

Das zu detektierende Objekt ist eine hierin beschriebene Aufnahmevorrichtung. Die Aufnahmevorrichtung kann etwa eine Pipettenspitze, insbesondere eine Einweg-Pipettenspitze (Disposable Tip) sein, oder durch ein Rack (Halterung für z.B. Pipettenspitzen) gebildet werden. Ein Rack für Pipettenspitzen kann beispielsweise je nach Art bzw. Größe der darin gehaltenen Pipettenspitzen unterschiedliche geometrische Merkmale aufweisen (z.B. Anzahl, Breite und Höhen von Rippen und Stegen), die über die Erfassungseinrichtung erfasst werden können, so dass die Art bzw. Größe über diese Merkmale erkannt werden kann. Weitere mögliche Aufnahmevorrichtungen stellen beispielsweise Prozessgefäße wie Reaktionsgefäße und/oder Vorratsgefäße, Abfallbehälter und/oder Vorratsgefäße für Verbrauchsmaterialien, Abdeckungen für zu schützende Geräteteile und ähnliche Gefäße, die bei derartigen automatisierten Anwendungen üblicherweise Verwendung finden, dar.

Der Apparat kann weiter etwa bei einem beweglichen oder verschiebbaren Objekt, wie einer Schublade, eine Überprüfung einer exakten Position des Objekts vornehmen. Hierfür werden nach deren Schließen bestimmte Merkmale (z.B. Ausschnitte bzw. Aussparungen im Deckblech) des Objekts vermessen. Diese Positionen werden mit in einer Konfigurationsdatei hinterlegten Daten verglichen, so dass Abweichungen bestimmt und im weiteren Prozess berücksichtigt werden können. Dies ist von besonderer Bedeutung beim Pipettieren etwa in kleine Gefäße bzw. kleine Wellgeometrien in Multiwellplatten oder bei einer exakten Positionierung von Prozessgefäßen, die jeweils von der Schublade aufgenommen sind, und dient zur Steigerung der Prozessrobustheit.

Die Erkennung anhand von Höhenwerten hat gegenüber einem optischen Bild den Vorteil, dass sie eine gewisse Unabhängigkeit von der farblichen und optischen Gestaltung der Objekte erlaubt. Daher kann die Farbe relativ frei gewählt und etwa für andere Zwecke genutzt werden.

In einer bevorzugten Ausführungsform ist die Erfassungseinrichtung ausgestattet, um eine Differenz zwischen dem mindestens einen Höhenwert eines Objektes und einem Referenzhöhenwert zu bilden, und aus der Differenz eine Anzahl von gestapelten Objekten zu ermitteln. Die Erfassungseinrichtung kann hierzu etwa den Höhenwert des bzw. der Objekte erfassen, daraus eine Differenz gegenüber einem Referenz-Höhenwert ermitteln, und aus der Differenz eine Anzahl von gestapelten Objekten berechnen bzw. der Differenz eine Anzahl von gestapelten Objekten zuordnen. Der Apparat kann ferner ausgestattet sein, um aus dem mindestens einen Höhenwert eines Objektes neben der Anzahl der gestapelten Objekte auch ihre Art zu ermitteln, nämlich etwa dadurch, dass der Höhenwert als Vielfaches einer Stapelhöhe eines der in Frage kommenden Objekte, nicht jedoch der übrigen in Frage kommenden Objekte erkannt wird. Dadurch können durch effiziente Einsetzung einer Erfassungseinrichtung zwei Informationen des Objekts durch einmaliges Messen ermittelt werden. Unter der Stapelhöhe ist dabei die zusätzliche Höhe durch ein zusätzlich gestapeltes Objekt zu verstehen. Während die Stapelhöhe für jedes Objekt derselben Art gleich ist, kann sie sich bei Objekten unterschiedlicher Art unterscheiden.

In einer weiteren Ausführungsform der Erfindung ist aus dem mindestens einen Höhenwert eines Objektes dessen Anwesenheit feststellbar. Diese Ausführungsformen erlauben es, die Inventarisierung eines Arbeitstisches in dem Prozessraum durch höhenmäßiges Abtasten etwa des Arbeitstisches durchzuführen. Die Höhenwerte bzw. das dreidimensionale Höhenprofil, das sich daraus ergibt, lässt sodann auf die sich auf dem Gerät befindlichen Verbrauchsmaterialien schließen. Ferner lassen sich für bewegliche Objekte oder Teile geometrische Merkmale (z.B. Kantenpositionen und -höhen) erfassen, und durch einen Vergleich von Soll-Parametern (etwa einer Soll-Position) mit Ist- Parametern (etwa einer Ist-Position) dieser Merkmale lassen sich Abweichungen bestimmen und bei der Handhabung von Gebrauchsmaterialien bzw. Consumables berücksichtigen.

Eine bevorzugte Ausgestaltung der Erfindung zeichnet sich dadurch aus, dass die Erfassungseinrichtung eingerichtet ist, um den mindestens einen Höhenwert eines Objektes mit einer 1-Punkt Messung zu erfassen. Eine 1-Punkt-Messung bedeutet, dass an einem diskreten Punkt des Objekts eine Höhenmessung (ggf. mehrmals an demselben bzw. dem gleichen Ort, d.h. Abweichungen, die sich z.B. durch Prozess- bzw. Positionierungenauigkeiten des Systems ergeben, werden ebenfalls darunter gefasst) durchgeführt wird und diese für sich allein genommen zur Bestimmung der Anzahl, der Anwesenheit, der Raumposition, des Zustandes und / oder der Art des Objekts herangezogen wird. Besonders bevorzugt wird diese Höhenmessung zur gemeinsamen Bestimmung mehrerer dieser Parameter verwendet.

Eine weitere bevorzugte Ausgestaltung der Erfindung zeichnet sich dadurch aus, dass die Erfassungseinrichtung ausgestattet ist, um mindestens zwei Höhenwerte, insbesondere ein entlang einer Linie angeordnetes Höhenprofil mindestens eines Detektionsbereichs eines Objektes zu erfassen. Die Linie kann sich auf einen oder mehrere Detektionsbereiche des Objektes erstrecken. Im Gegensatz zu der 1-Punkt-Messung umfasst eine Messung eines Höhenprofils eines Objektes die Messung von mindestens zwei unterschiedlichen Punkten, die durch zwei separate Messungen der Erfassungseinrichtung ermittelt werden. Dabei kann die Erfassungseinrichtung zu den mindestens zwei Punkten, an denen die Messung erfolgt, transportiert werden (z.B. wenn der zu messende Bereich örtlich fixiert ist). Vorzugsweise ist die Erfassungseinrichtung relativ zum Objekt bewegbar angeordnet. Es ist ebenfalls möglich, die Erfassungseinrichtung örtlich zu fixieren und den zu messenden Bereich insbesondere entlang der zu messenden Linie zu bewegen. Die mindestens zwei unterschiedlichen Punkte können unabhängig voneinander von der Erfassungseinrichtung unterschiedlich weit oder gleich weit entfernt sind sein, und daher für die Erfassungseinrichtung eine unterschiedliche oder eine identische Höhe aufweisen.

In einer bevorzugten Ausführungsform ist der Apparat ausgestattet, um mindestens zwei Höhenprofile zu erfassen. Bei Messung von vorzugsweise mindestens zwei Höhenprofilen eines Objekts liegen diese vorzugsweise auf einander gegenüberliegenden Seiten des Objekts, obwohl es auch denkbar ist, ein zweites oder mehrere Höhenprofile etwa als Kontrolle(n) entlang derselben Linie zu erfassen. Es ist weiter bevorzugt, dass die zwei oder mehr Höhenprofile jeweils in zueinander entgegengesetzter Richtung erfasst werden. Dabei ist sowohl denkbar, dass die zwei in entgegengesetzter Richtung erfassten Höhenprofile entlang der gleichen oder derselben Linie nur in unterschiedlicher Richtung erfasst werden, oder dass die Erfassung an unterschiedlichen Detektionsbereichen des Objektes erfolgt. Besonders bevorzugt ist dabei die Erfassung in entgegengesetzter Richtung an zwei einander gegenüberliegenden Stirnseiten des Objektes. Durch die Messung von zwei oder mehr Höhenprofilen pro Objekt kann die Sicherheit und Genauigkeit der Messung erhöht werden, und es können zusätzliche Informationen z.B. über eine Verdrehung des Objekts gewonnen werden. In den meisten Fällen ist die Messung von zwei Höhenprofilen ausreichend.

In einer besonders bevorzugten Ausführungsform umfasst die Erfassungseinrichtung mindestens eine, vorzugsweise genau eine Strahlungsquelle zum Bestrahlen des Detektionsbereichs, die 3-dimensionale Abbildungen erzeugen kann, und/oder mindestens einen, vorzugsweise genau einen Sensor zum Messen einer Intensität der Strahlung, die von dem Detektionsbereich kommt. Mit einer dreidimensionalen Abbildnug im Sinne der Erfindung ist gemeint, dass ein Höhenwert jeweils in Abhängigkeit von einer Position in einer zur Höhenrichtung senkrechten Ebene erfasst wird, wobei die Position in den beiden Dimensionen der zur Höhenrichtung senkrechten Ebene variabel ist. Dabei können sowohl Teile (Linien oder einzelne Punkte) als auch die gesamte Ebene erfasst werden. Die von dem Detektionsbereich kommende Strahlung umfasst vorzugsweise die durch den Detektionsbereich reflektierte Strahlung der Strahlungsquelle. Die Strahlungsquelle und der Sensor sind relativ zueinander in einem Winkel, vorzugsweise in einem ungefähr rechten Winkel, zu der Linie angeordnet, entlang derer das oder die Höhenprofile gemessen wird oder werden. Dies erlaubt eine Höhenmessung beispielsweise mittels Triangulation, bei der nur geringe tote Winkel in Längsrichtung aufgrund des räumlichen Versatzes zwischen Strahlungsquelle und Sensor in Kauf genommen werden müssen.

In einer bevorzugten Ausführungsform umfasst der Apparat einen Prozessraum, wobei bevorzugterweise der durch die Erfassungseinrichtung erfasste Bereich im Prozessraum angeordnet ist, insbesondere ein vorbestimmter Bereich des Prozessraums ist. Dabei ist der vorbestimmte Bereich des Prozessraums eingerichtet, das zumindest eine Objekt aufzunehmen, wobei der vorbestimmte Bereich insbesondere ein Aufnahmebehältnis oder eine Schublade ist. So muss nicht der gesamte Prozessraum abgetastet oder erfasst werden, um ein Objekt zu finden, das zu identifizieren und/oder durch eine Transportvorrichtung aufzunehmen ist. Eine erhöhte Geschwindigkeit der Inventarisierung des Prozessraums ist die vorteilhafte Folge. In einer bevorzugten Ausführungsform ist die Erfassungseinrichtung relativ zu dem Objekt im Prozessraum bewegbar angeordnet. Somit ist durch Abtasten des Prozessraums eine Inventarisierung möglich.

In einer besonders bevorzugten Ausführungsform umfasst der Apparat eine Transportvorrichtung zum Transportieren des Objekts. Dabei kann die Erfassungseinrichtung vorzugsweise direkt an der Transportvorrichtung zum Transportieren des mindestens einen Objektes angeordnet sein oder zumindest in dessen Nähe. Dadurch wäre nur eine bewegliche Vorrichtung in dem Prozessraum erforderlich, was zu Kostenersparnissen und einer Steuerung oder Regelung mit geringerer Komplexität führt Eine solche Anordnung hat den Vorteil, dass nicht nur die im Prozessraum angeordneten Objekte erfasst werden können, sondern auch während eines Aufnehmens, Transportierens, oder Abgebens des Objekts eine Prozessüberwachung stattfinden kann. Dies ermöglicht das sichere Handhaben von Objekten, also die Aufnahme, den Transport, das Absetzen der Objekte und die Überwachung der auf der Transportvorrichtung befindlichen Verbrauchsmaterialien. Somit kann die gesamte Prozesskette überwacht werden: die Position und Art der in dem Prozessraum, wie auf der Prozessfläche befindlichen Objekte, die Position der Objekte auf der Transportvorrichtung und das sichere Absetzen des oder der Objekte auf der Prozessfläche.

In einer bevorzugten Ausführungsform ist der mindestens eine Höhenwert des Detektionsbereichs eines durch eine Transportvorrichtung aufgenommenen Objekts, insbesondere des zu einem Sensor der Erfassungseinrichtung proximalsten Objekts einer Vielzahl von durch die Transportvorrichtung aufgenommen, vorzugsweise gestapelten Objekten, durch die Erfassungseinrichtung erfassbar. Somit ist nicht nur die Art des Objekts, sondern auch die Anzahl der gestapelten Objekte erfassbar, nämlich über die Distanz bzw. den Abstand zwischen dem zu dem Sensor proximalsten Objekt und einer Referenzebene bzw. Referenzhöhe. Dieses Verfahren kann auch auf auf dem Prozesstisch oder anderweitig im Prozessraum angeordneten gestapelten Objekten angewendet werden, sofern die Position der Referenzebene der Erfassungseinrichtung oder einer zu der Erfassungseinrichtung gehörenden Auswerteeinheit bekannt ist. Ferner muss dafür der Erfassungseinrichtung oder der Auswerteeinheit nach dem Identifizieren des Objekts über das Höhenprofil die Höhe eines einzelnen Objekts bekannt sein oder von der Erfassungseinrichtung ermittelbar sein, um anschließend über die Distanz, die die Summe der Höhen der einzelnen gestapelten Objekte umfasst, und die Höhe eines einzelnen gestapelten Objekts deren Anzahl zu ermitteln.

In einer bevorzugten Ausgestaltung ist der Sensor durch einen Ultraschallsensor oder einen Lasersensor realisiert. Auch eine Kombination von Ultraschallsensor und Lasersensor in einem oder mehreren Bauteilen ist möglich. Solche Sensoren werden in der Industrie üblicherweise für Wegmessungen eingesetzt. Zudem kann die Erfassungseinrichtung einen Ultraschallemitter und/oder einen Laser als Strahlungsquellen aufweisen. Generell sind für die vorliegende Erfindung alle Strahlungsquellen geeignet, die in der Lage sind, eine Höhe zu ermitteln und 3-dimensionale Abbildungen zu erzeugen.

Gemäß einem Aspekt der Erfindung wird eine Aufnahmevorrichtung zur Aufnahme von Material für die Prozessierung, Aufreinigung und/oder Analyse von biologischen Zielmolekülen zur Verfügung gestellt. Die Aufnahmevorrichtung weist mindestens ein Identifikationselement auf, wobei das mindestens eine Identifikationselement ein Höhenprofil zur Identifikation der Aufnahmevorrichtung definiert, wobei das Höhenprofil für mindestens eine Höhenmessung vorgesehen ist und sich zumindest abschnittsweise entlang einer Linie, vorzugsweise einer geraden Linie, erstreckt. Das Höhenprofil weist mindestens zwei Identifikationsflächen von unterschiedlicher Höhe und/oder unterschiedlicher Länge zur Höhenmessung auf. Dabei kann die Linie sich zumindest entlang einer Außenkontur der Aufnahmevorrichtung erstrecken. Durch die Anordnung des Detektionsbereichs entlang einer Linie braucht der Detektionsbereich der Aufnahmevorrichtung nur entlang der Linie abgetastet zu werden. Die Linie kann dabei auch gekrümmt oder kreisabschnittsförmig angeordnet sein. Als Höhenprofil wird ein Profil mit mindestens zwei unterschiedlichen Höhen verstanden, wobei eine Höhe insbesondere bei Vorliegen einer fehlerhaften Messung auch als "unendlich" erfasst werden kann, wenn das Identifikationselement eine Lücke aufweist, so dass die Erfassungseinrichtung etwa die Entfernung zur Auflagefläche der Aufnahmevorrichtung oder eines anderen Objekts erfasst. Das Höhenprofil dient zur Identifikation der Aufnahmevorrichtung, damit ein Typ von Aufnahmevorrichtung von einem anderen Typ von Aufnahmevorrichtung unterschieden werden kann.

Somit lässt sich eine Vielzahl von Aufnahmevorrichtungen unterscheiden.

Dabei kann vorzugsweise vorgesehen sein, dass die mindestens zwei Identifikationsflächen aneinander angrenzen und/oder beabstandet voneinander entlang des Höhenprofils, insbesondere bevorzugt entlang der Linie angeordnet sind. So kann in einer bevorzugten Ausführungsform die mindestens eine Identifikationsfläche insbesondere eine Länge entlang der Linie von ungefähr 1 mm bis ungefähr 10 mm, vorzugsweise von ungefähr 2 bis 8 mm, weiter bevorzugt von ungefähr 3 bis 6 mm aufweisen.

Dabei weist in einer bevorzugten Ausführungsform die mindestens eine Identifikationsfläche quer zur Linie eine Breite von ungefähr 1mm bis ungefähr 10mm, vorzugsweise von ungefähr 2 bis 8 mm, weiter bevorzugt von ungefähr 3 bis 5 mm auf. Es kann auch vorgesehen sein, dass mindestens eine, vorzugsweise jede, der mindestens zwei Identifikationsflächen viereckig, vorzugsweise rechteckig ist. Generell sind auch andere Flächenformen wie rund, elliptisch oder vieleckig als Identifikationsfläche denkbar, wobei diese Flächen dann zumindest die minimale viereckige bzw. vorzugsweise rechteckige Grundfläche umfassen sollten.

In einer bevorzugten Ausführungsform weist das Höhenprofil mindestens eine Erfassungskante auf, die jeweils an eine Identifikationsfläche angrenzt, und vorzugsweise zwischen der Identifikationsfläche und jeweils einer zur Identifikationsfläche orthogonalen Verbindungsfläche gebildet wird. Dabei kann die Kante im Wesentlichen orthogonal zur Längserstreckung entlang der Linie angeordnet sein, entlang der das Höhenprofil erfasst wird. Die mindestens eine Kante kann zur Unterscheidung der Aufnahmevorrichtung von einem anderen Objekt geeignet sein. Dies ist beispielsweise der Fall, wenn die Höhe der Kante, oder ihr horizontaler und / oder vertikaler Abstand zu anderen Kanten geeignet ist, die Aufnahmevorrichtung von anderen Objekten zu unterscheiden.

So grenzen in einer weiteren bevorzugten Ausführungsform zwei Identifikationsflächen an vorzugsweise gegenüberliegende Seiten einer Verbindungsfläche an, wobei die beiden an die Verbindungsfläche angrenzenden Identifikationsflächen unterschiedliche Höhen und optional unterschiedliche Längen und/oder Breiten aufweisen, wobei insbesondere die Verbindungsfläche entlang der Linie zwischen den beiden Identifikationsflächen angeordnet ist.

In einer besonders bevorzugten Ausführungsform ist das Höhenprofil im Wesentlichen symmetrisch, vorzugsweise spiegelsymmetrisch oder punktsymmetrisch bezüglich einer Spiegelebene orthogonal zu der Linie, die sich insbesondere entlang der Außenkontur der Aufnahmevorrichtung erstreckt. Es gehört zum Wissen des Fachmannes, wie die Identifikationsflächen relativ zu der Spiegelebene angeordnet werden können, um beispielsweise ein spiegelsymmetrisches oder punktsymmetrisches Höhenprofil zu erhalten. Damit kann die Sicherheit einer korrekten Erkennung der Aufnahmevorrichtung weiter erhöht werden. Auf Grund der bevorzugten Erfassung des Höhenprofils entlang einer Linie, die in Richtung der Längsausdehnung der Indentifikationsfläche(n) erfolgt, können die Identifikationsflächen auf beiden Seiten einer Ebene, die im Wesentlichen orthogonal zu der Linie ist, entlang der das Höhenprofil gemessen wird, eine unterschiedliche Breite aufweisen, ohne dass das Höhenprofil verändert wird.

Es kann auch vorgesehen sein, dass das Höhenprofil nicht symmetrisch, vorzugsweise nicht spiegelsymmetrisch oder nicht punktsymmetrisch gestaltet ist. Dabei kann vorgesehen sein, dass die Identifikationsflächen auf beiden Seiten einer Ebene, die im Wesentlichen orthogonal zu der Linie ist, entlang der das Höhenprofil erfasst wird, eine unterschiedliche Länge und/oder Höhe und optional zusätzlich eine unterschiedliche Breite aufweisen.

In einer bevorzugten Ausführungsform weist die Aufnahmevorrichtung eine Außenkontur mit mindestens zwei sich gegenüberliegenden Seiten auf, wobei die sich gegenüberliegenden Seiten jeweils mindestens ein erstes bzw. zweites Identifikationselement umfassen, die vorzugsweise zueinander axialsymmetrisch um eine Mittelachse der Aufnahmevorrichtung gestaltet sind. Wenn daher auf beiden Seiten durch eine Erfassungseinrichtung ein Höhenprofil abgetastet wird, so kann durch die doppelte Abtastung bzw. Erfassung eine höhere Sicherheit bei Erkennung des Typs der Aufnahmevorrichtung erreicht werden.

In einer bevorzugten Ausführungsform weist die Aufnahmevorrichtung eine obere Seite auf, von der das aufzunehmende Material aus der Aufnahmevorrichtung parallel zu einer Mittelachse entnommen bzw. in die Aufnahmevorrichtung abgegeben wird, wobei das Höhenprofil derart angeordnet ist, dass eine Höhenmessung des Höhenprofils von oben durchführbar ist. Dabei kann mindestens eine der Identifikationsflächen, vorzugsweise alle Identifikationsflächen, orthogonal zur Mittelachse angeordnet sein.

Es kann vorgesehen sein, dass mindestens eine der Identifikationsflächen im Wesentlichen die gleiche Höhe wie eine obere Kante der Aufnahmevorrichtung aufweist.

In einer bevorzugten Ausführungsform ist das von der Aufnahmevorrichtung aufzunehmende Material aus der Gruppe umfassend Verbrauchsmaterial, wie etwa ein Prozessgefäß oder eine Einweg-Pipiettenspitze; ein vor direkter Berührung zu schützendes Geräteteil , wie etwa ein Magnet zur Probeneinwirkung; ein für die Prozessierung, Aufreinigung und/oder Analyse der biologischen Zielmoleküle verwendetes Material wie etwa eine Probenmischung mit den Zielmolekülen, eine Lyse-, Binde-, Puffer-, Wasch-, Elutions-Mischung oder sonstige Prozessmischungen wie Enzyme, Sonden, pipettierbare Trennmaterialien wie Suspensionen aus magnetischen Beads, Ausgangsmaterialien für Downstreamapplikationen wie PCR, Assays und/oder Arrays ausgewählt.

So kann in einer Ausführungsform vorgesehen sein, dass die Aufnahmevorrichtung ein mindestens einem an einem Ende geschlossenes Aufnahmebehältnis zur Aufnahme des Materials aufweist. Dabei kann das Aufnahmebehältnis ein Volumen von 8 $\mu$l bis 7000$\mu$l, vorzugsweise von 10 $\mu$l bis 5000 $\mu$l, am meisten bevorzugt von 15 $\mu$l bis 3000 $\mu$l umfassen.

In einer Ausführungsform weist die Aufnahmevorrichtung eine Mehrzahl von Aufnahmebehältnissen auf, vorzugsweise 8 Aufnahmebehältnissen, wobei die Aufnahmebehältnisse vorzugsweise in einer Matrix-Anordnung angeordnet sind.

In einer weiteren bevorzugten Ausführungsform weist die Aufnahmevorrichtung mindestens einen an zwei vorzugsweise gegenüberliegenden Seiten geöffneten Aufnahmebereich zur Aufnahme des Materials auf. Beispiele für eine derartige Aufnahmevorrichtung stellen Pipettenspitzen dar.

Es kann auch vorgesehen sein, dass die Aufnahmevorrichtung mindestens einen Durchlass, vorzugsweise mindestens zwei Durchlässe, zum Durchführen eines Hebeelementes einer Transportvorrichtung aufweist, wobei der oder die Durchlässe sich vorzugsweise parallel zur Längsachse Mittelachse erstrecken.

In einer bevorzugten Ausführungsform ist die Aufnahmevorrichtung derart geformt, das zwei übereinander angeordnete Aufnahmevorrichtungen derart in Eingriff kommen, dass die übereinander angeordneten Aufnahmevorrichtungen in vorbestimmten Ausrichtungen zueinander stapelbar sind und vorzugsweise gemeinsam eine Gesamthöhe aufweisen, die geringer als die Summe der Einzelhöhen der Aufnahmevorrichtungen ist, wobei die Aufnahmevorrichtungen vorzugsweise derart stapelbar sind, dass jeweilige Durchlässe mehrerer gestapelter Aufnahmevorrichtungen entlang einer Linie zueinander ausrichtbar sind. Dabei kann die stapelbare Aufnahmevorrichtung eine Stapelhöhe von weniger als 80% der Gesamthöhe der Aufnahmevorrichtung aufweisen, wobei die Stapelhöhe vorzugsweise weniger als ungefähr 50 mm und/oder mehr als ungefähr 5 mm, weiter bevorzugt 10 bis 40 mm und am meisten bevorzugt 15 bis 30 mm beträgt. Dabei kann eine Unterseite einer Aufnahmevorrichtung auf eine Oberseite einer Aufnahmevorrichtung zum Stapeln aufsetzbar sein. In Ausführungsformen ist die Aufnahmevorrichtung integral aus einem Stück, etwa aus einem Kunststoff-Teil (vorzugsweise auf Polymer-Basis) geformt.

In einer Ausführungsform kann vorgesehen sein, dass eine Seitenwand der Aufnahmevorrichtung einen flexiblen Druckbereich zum Drücken durch einen menschlichen Finger aufweist, der sich in Richtung der Abtast-Linie entlang zumindest teilweise zwischen zwei Identifikationsflächen befindet. eines Teils der Lücke erstreckt.

Die Aufnahmevorrichtung kann eine Aufnahmevorrichtung zum Aufnehmen von Gefäßen, Verbrauchsmaterialien, Flüssigkeit und/oder dergleichen sein. Insbesondere kann die Aufnahmevorrichtung ein Prozessgefäß, eine Einweg-Pipettenspitze, eine Wegwerf-Umhüllung, oder ein sonstiges Verbrauchsmaterial sein, oder ein Rack für mindestens ein Prozessgefäß, eine Einweg-Pipettenspitze, eine Wegwerf-Umhüllung, oder ein sonstiges Verbrauchsmaterial sein, oder eine Schublade oder ein Abfallkanal sein.

Gemäß einem weiteren Aspekt der Erfindung wird ein Apparat wie oben beschrieben für eine Aufnahmevorrichtung wie oben beschrieben zur Verfügung gestellt.

Gemäß einem weiteren Aspekt der Erfindung wird ein Verfahren zum Inventarisieren, zur Lagebestimmung und/oder zur Ausrichtungsbestimmung von Objekten, die zum Prozessieren eines Materials, das biologische Zielmoleküle enthält, auf einem entsprechenden Apparat benötigt werden, zur Verfügung gestellt. Die Objekte sind Aufnahmevorrichtungen wie hierin beschrieben. Bei dem Verfahren wird mindestens ein Höhenwert eines Detektionsbereichs des jeweiligen Objekts, wie einer Schublade, Gefäß, Verbrauchsmaterial und/oder dergleichen, erfasst; und bei dem Verfahren wird aus dem Höhenwert eine Raumposition und/oder eine Ausrichtung und/oder eine Art und/oder die Anwesenheit und/oder die Anzahl und/oder ein Zustand des jeweiligen Objekts auf dem Apparat ermittelt.

Bei den Objekten kann es sich um Bestandteile des Apparates handeln, für die die Bestimmung der Raumposition, der Ausrichtung, der Art und/oder des Zustandes für den Prozessverlauf von Bedeutung sind oder um auf das Gerät aufgebrachte Gegenstände, wobei für letztere auch die Anwesenheit und/oder die Anzahl zusätzlich zu den anderen oben genannten Aspekten noch relevant sein können. Beispiele für derartige Bestandteile des Apparates sind Schubladen, Abfallbehälter für Verbrauchsgüter und Chemikalien, Adapter zur Aufnahme von primären oder sekundären Reaktions- bzw. Probengefäßen, Adapter zum Abstellen von benutzten Pipettenspitzen zur späteren Wiederverwendung. Beispiele für auf das Gerät aufgebrachte Objekte stellen die oben aufgeführten dar.

In einer bevorzugten Variante des Verfahrens wird zur Bestimmung der Raumposition und/oder der Art und/oder der Anwesenheit und/oder der Anzahl und/oder des Zustandes des Objekts eine 1-Punkt Messung zum Erfassen des Höhenwerts durchgeführt. Der dabei erhaltene Wert wird mit entsprechend vorher festgelegten Daten verglichen. Das Ergebnis des Vergleichs wird dann zur Steuerung des Prozessverlaufs auf dem Apparat verwendet. Wenn es zu Abweichungen zwischen dem bei der Messung des Höhenwertes erhaltenen Ergebnis und den vorher festgelegten Daten kommt, kann vorzugsweise optional ein Hinweis abgegeben werden. Der Anwender könnte in so einem Fall bei Bedarf die Parameter ändern, um die Abweichung zu beseitigen. So könnten Probleme im Verlauf des Prozesses, z.B. durch für den geplanten Prozess nicht ausreichend zur Verfügung gestellte Verbrauchsmaterialien, noch verschlossene Gefäße, verkehrt geladene Verbrauchsmaterialien, eine Verschiebung der Position der Objekte durch Fehler beim Beladen vermieden und ein reibungsloser Prozessablauf sichergestellt werden.

Eine weitere bevorzugte Ausführungsform zeichnet sich dadurch aus, dass mindestens zwei Höhenwerte, insbesondere ein Höhenprofil, des Detektionsbereichs erfasst werden, wobei vorzugsweise das Höhenprofil entlang einer Linie angeordnet ist. Dabei kann der mindestens eine Höhenwert, insbesondere das Höhenprofil, ein Identifikationsmuster sein, aus dem die Art des Objekts ermittelt wird. Die erhaltenen Höhenwerte, insbesondere das Höhenprofil, werden mit entsprechend vorher festgelegten Daten verglichen und das Ergebnis des Vergleichs wird zur Steuerung des Prozessverlaufs auf dem Apparat verwendet. Wenn es zu Abweichungen zwischen dem bei der Messung der Höhenwerte erhaltenen Ergebnis, insbesondere dem erhaltenen Höhenprofil, und den vorher festgelegten Daten kommt, kann vorzugsweise optional ein Hinweis abgegeben werden.

In einer bevorzugten Ausführungsform wird zumindest vor dem Erfassen des ersten Höhenprofils mindestens ein Justage-Höhenprofil entlang mindestens einer Justage-Linie erfasst. Es ist zudem möglich, wenn gewünscht, auch während des Prozessverlaufs Justage-Höhenprofile zu ermitteln, auch wenn dies in den meisten Fällen nicht erforderlich sein wird. Des Weiteren können mehrere Justage-Höhenprofile entlang derselben Justage-Linie erfasst werden. Daraus können dann beispielsweise Mittelwerte gebildet werden. Es können auch mehrere Höhenprofile entlang mehrerer Justage-Linien erfasst werden, um eventuelle Abweichungen oder Fehler feststellen bzw. ausschließen zu können. Da der Aufwand mit zunehmender Anzahl von Messungen steigt, werden vorzugsweise weniger als 5 Messungen entlang derselben Justage-Linie zur Justierung vorgenommen, weiter bevorzugt weniger als 3 und noch weiter bevorzugt nur eine. In einer besonders bevorzugten Ausführungsform wird das Justage-Höhenprofil mindestens einer Justage-Linie, die sich an einer Stelle innerhalb des Gerätes befindet, an dem keine Objekte detektiert werden sollen, gemessen und die nachfolgenden Höhenmessungen verwenden das erhaltene Höhenprofil als Basis bzw. als Referenzprofil. Dies bedeutet, dass das gemessene Höhenprofil unter Verwendung von Informationen des Referenzprofils gemessen (etwa Wahl des Detektionsbereichs in Abhängigkeit des Referenzprofils) oder weiterverarbeitet wird (etwa Differenzbildung zwischen dem Höhenprofil und dem Referenzprofil oder einem gemittelten oder geglätteten Referenzprofil). Besonders vorteilhaft befinden sich derartige Justage-Linien auf der Arbeitsfläche, beispielsweise im Bereich der Schubladen.

Bei einer weiteren bevorzugten Ausführungsform wird zunächst mindestens ein Höhenprofil entlang mindestens einer Justage-Linie, die innerhalb des Gerätes senkrecht zu einer ersten Kante mit definierter Soll-Position verläuft, gemessen. Zudem wird mindestens ein Höhenprofil entlang mindestens einer Justage-Linie, die innerhalb des Gerätes senkrecht zu einer zweiten Kante mit definierter Soll-Position verläuft, gemessen, wobei die erste Kante rechtwinklig zur zweiten Kante angeordnet ist. Aus den erhaltenen Höhenlinien der vorherigen Messungen werden die tatsächlichen Positionen der definierten Kanten bestimmt. Die tatsächlichen Positionen der Kanten werden mit deren Soll-Positionen verglichen und die Information aus dem Vergleich zwischen den Ist-Positionen und den Soll-Positionen der definierten Kanten wird zur Steuerung des weiteren Prozessverlaufs auf dem Apparat verwendet.

Die erste und/oder zweite Kante kann dabei durch Ränder einer viereckigen, vorzugsweise rechteckigen Aussparung oder Ausprägung gebildet sein.

Durch die obigen Messungen, die sogenannte Offset-Werte liefern, können Abweichungen zu den im System des Apparates gespeicherten Werten festgestellt werden. Die festgestellten Diskrepanzen zwischen den Soll-Werten und den Ist-Werten können zu unterschiedlichen Reaktionen führen. Es besteht beispielsweise die Möglichkeit, die dadurch bestimmten tatsächlichen Ist-Position im Prozessverlauf zur Definition der Position anderer Bauteile oder Verbrauchsmaterialien des Apparates, wie z.B. Racks für Pipettenspitzen oder Multiwellplatten mit sehr kleinem Querschnitt, einzelne Proben- bzw. Reaktionsgefäße mit geringem Durchmesser, zu verwenden. Es kann jedoch Fälle geben, in denen die Abweichungen so drastisch sind, dass es wenig Sinn macht, den nachfolgenden Prozess auf derartige Abweichungen abzustimmen. Dies wäre beispielsweise der Fall wenn die Ist-Position einer offenen Schublade bestimmt wird und diese sehr deutlich von der Soll-Position der geschlossenen Schublade abweicht. Insbesondere in solchen Fällen ist es daher beispielsweise möglich, wenn die Diskrepanz zwischen den Soll-Positionen und den Ist-Positionen der definierten Kanten einen vorher bestimmten Wert überschreitet, eine Fehlermeldung anzuzeigen. In einer bevorzugten Ausführungsform wird ein jeweiliges Höhenprofil mehrfach entlang zueinander paralleler Linien erfasst. Die sind Linien jeweils lateral zueinander versetzt, bevorzugt um weniger als 2 mm.

In einer bevorzugten Ausführungsform des erfindungsgemäßen Verfahrens wird aus einer Höhendifferenz zwischen dem Detektionsbereich des Objekts und einer Referenzhöhe eine Anzahl von gestapelten Objekten ermittelt. Bevorzugt können gleichzeitig mehrere Informationen, nämlich etwa die Art und die Anzahl der Objekte, aus einer Messung des Höhenwerts des Detektionsbereichs ermittelt werden.

In einer bevorzugten Ausführungsform wird die Art und die Anzahl der gestapelten Objekte mit der folgenden Formel ermittelt:

$$h_T = (n - 1) \times h_{SO} + d,$$

wobei $h_T$ die Höhendifferenz zwischen dem mindestens einen erfassten Höhenwert des Detektionsbereichs eines Objekts mit einem bestimmten Höhenprofil und einer Referenzhöhe, n (n>=1) die Anzahl der gestapelten Objekte, $h_{SO}$ eine Stapelhöhe zwischen zwei benachbarten, gestapelten Objekten und d eine Höhe des Detektionsbereichs des Objekts (relativ zum definierten Referenzpunkt) ist. Die Stapelhöhe $h_{SO}$ stellt vorzugsweise den Abstand zwischen den Detektionsbereichen zweier benachbarter gestapelter Objekte dar. Üblicherweise ist dieser Wert gleich für eine bestimmte Art von Objekt, unabhängig davon wie viele derartige Objekte gestapelt sind. Die Stapelhöhen verschiedener Alternativen eines Objektes können zwar gleich sein, sind jedoch vorzugsweise unterschiedlich (so zum Beispiel verschiedene Racks für Pipettenspitzen oder unterschiedliche Arten von Reaktions- oder Vorratsgefäßen). Von der Art her verschiedene Objekte können ebenfalls gleiche oder verschiedene Stapelhöhen aufweisen. So können beispielsweise jeweils ein Rack für Pipettenspitzen und eine Art von Vorratsgefäßen identische Stapelhöhen aufweisen, die jedoch verschieden sind von den Stapelhöhen eines Racks für andere Pipettenspitzen und eine andere Art von Reaktionsgefäßen, wobei letztere untereinander durchaus wieder gleiche Stapelhöhen aufweisen können. Wenn sich nur ein Objekt an der Position, an der die Messung stattfindet, befindet, so ist n=1 und damit $h_T = d$. Falls die Höhe $h_T$ mit ausreichender Genauigkeit ermittelt werden kann und die Stapelhöhe $h_{SO}$ oder Detektionshöhe der in Frage kommenden Objekte sich auf geeignete Weise unterscheiden, so kann aus dem gemessenen Wert $h_T$ eindeutig auf die Art des Objekts sowie auf deren Anzahl n zurückgeschlossen werden.

Dabei kann mindestens ein Objekt durch eine Transportvorrichtung, z.B. einen Greifer, einen Spreizer oder dergleichen aufgenommen werden, und der mindestens eine Höhenwert des Detektionsbereiches von dem aufgenommenen Objekt erfasst werden. Vorzugsweise wird daher die Anzahl und/oder Art der gestapelten Objekte ermittelt, während die Objekte sich an oder in der Transportvorrichtung befinden. Es ist zudem bevorzugt, dass die Höhendifferenz ausgehend von dem gestapelten Objekt bestimmt wird, das der Erfassungseinrichtung und insbesondere dem Laser und/oder dem Ultraschallemitter am nächsten ist.

In einer bevorzugten Ausführungsform des erfindungsgemäßen Verfahrens wird eine Anzahl und/oder Art von gestapelten Objekten ermittelt, während diese durch die Transportvorrichtung aufgenommen sind. Dabei kann vorgesehen sein, dass vorzugsweise ein oder mehrere der aufgenommenen und erfassten Objekte von der Transportvorrichtung abgesetzt werden, wobei vorzugsweise sowohl einzelne Objekte, mehrere Objekte gleichzeitig oder alle Objekte gleichzeitig abgesetzt werden können.

Vorzugsweise kann nach dem Absetzen festgestellt werden, ob sich die Anzahl der von der Transportvorrichtung aufgenommenen Objekte reduziert hat und/oder ob das Objekt von der Transportvorrichtung abgegeben wurde.

In einer weiteren vorteilhaften Ausgestaltung zeichnet sich das erfindungsgemäße Verfahren dadurch aus, dass das Objekt eine Fläche mit mehreren Öffnungen zur Aufnahme von Pipettenspitzen aufweist, die vorzugsweise einen Kragen aufweisen, der größer als die Öffnungen ist. Ein Höhenprofil der Fläche, oder insbesondere mindestens ein Höhenwert eines Punktes an einem Rand jeweils einer der Öffnungen, kann erfasst werden, wobei über das Höhenprofil und/oder den jeweiligen mindestens einen Höhenwert die Anwesenheit und/oder Anzahl der Pipettenspitzen erfasst wird.

Durch Abtasten einer Fläche innerhalb eines mit Substanzen oder mehreren Teilen befüllbaren Objektes (bzw. einer Aufnahmevorrichtung), z. B. eines Racks, also innerhalb eines Rahmens eines Objekts, kann die Anzahl der befüllten Teile, z. B. von Pipettenspitzen, bzw. die Anwesenheit von Substanzen bestimmt werden, da an derselben Stelle des befüllbaren Objektes, z.B. den Racks, bei Vorliegen eines befüllten Teils, z. B. einer Pipettenspitzen, bzw. einer Susbtanz andere geometrische Merkmale auftreten als bei leeren Aufnahmebereichen bzw. Aufnahmebehältnissen eines Objekts z. B. eines Racks. Es kann so beispielsweise die genaue Anzahl der Pipettenspitzen und deren Position bestimmt werden, es ist keine vorgeschriebene Position durch eine Softwareprogrammierung notwendig, so dass Benutzerfehler durch falsch positionierte Objekte zur Aufnahme von Einwegspitzen ausgeschlossen werden. Ferner werden dabei anders als im Stand der Technik beschrieben keine Pipettenspitzen "verbraucht", da diese berührungslos vermessen werden.

Nach der Inventarisierung einer Prozessfläche, wie eines Arbeitstisches, kann dem Benutzer sofort eine Rückmeldung über eine Anzahl von möglichen prozessierbaren Samples bei einem ausgewählten Skript gegeben werden oder er kann zu Aktionen aufgefordert werden, damit er beispielsweise den Abfallbehälter entleert, Schubladen schließt oder verkehrt beladene Verbrauchsmaterialien austauscht.

Mit der erfindungsgemäßen Vorrichtung kann auch bei Gefäßen bzw. Objekten mit Deckel überprüft werden, ob die Gefäße offen vorliegen oder mit Deckel verschlossen sind.

Bei Fehlbedienung (Deckel geschlossen) kann der Benutzer beispielsweise mit dem Öffnen beauftragt werden. Zudem sind Teile und Geometrien in dem Prozessraum immer mit gewissen Toleranzen behaftet. Um dennoch kleine Gefäße oder Objekte während der Prozessierung genau zu treffen, kann die tatsächliche Lage relativ zum Roboter bzw. zur Transportvorrichtung mit dem oben beschriebenen Verfahren ausgemessen werden und für das folgende Prozessierverfahren berücksichtigt werden.

Die Erfindung bezieht sich auch auf eine Vorrichtung zum Ausführen der offenbarten Verfahren und umfasst auch Vorrichtungsteile zum Ausführen jeweils einzelner Verfahrensschritte. Die im Zusammenhang mit dem Verfahren beschriebenen besonderen Merkmale sind daher analog auch auf die Vorrichtung und die Vorrichtungsteile übertragbar. Diese Verfahrensschritte können durch Hardwarekomponenten, durch einen mittels entsprechender Software programmierten Computer, durch eine Kombination von beiden, oder in irgendeiner anderen Weise ausgeführt werden. Die Erfindung ist des Weiteren auch auf Verfahren gerichtet, gemäß denen die jeweils beschriebenen Vorrichtungen arbeiten.

Sie beinhaltet Verfahrensschritte zum Ausführen jeder Funktion der Vorrichtungen. Die im Zusammenhang mit der Vorrichtung und den Vorrichtungsteilen beschriebenen besonderen Merkmale sind daher analog auch auf das Verfahren übertragbar.

Weitere Merkmale und Vorteile der Erfindung ergeben sich aus der nachstehenden Beschreibung, in der mehrere Ausführungsbeispiele der Erfindung anhand schematischer Zeichnungen im Einzelnen erläutert werden. Dabei zeigt:

Fig. 1    ein Objekt (Aufnahmevorrichtung) in einer perspektivischen Ansicht gemäß einer ersten Ausführungsform der Erfindung;

Fig. 2a    ein Objekt (Aufnahmevorrichtung) in einer perspektivischen Ansicht gemäß einer zweiten Ausführungsform der Erfindung;

Fig. 2b    eine perspektivische Ansicht des Objekts aus Fig 2a der zweiten Ausführungsform in einem Aufnahmebehältnis;

Fig. 3a    eine Aufsicht eines Objekts (Aufnahmevorrichtung) gemäß einer dritten Ausführungsform der Erfindung;

Fig. 3b    eine Seitenansicht des Objekts gemäß der dritten Ausführungsform der Erfindung aus Fig. 3a;

Fig. 4a    eine perspektivische Ansicht eines Objekts (Aufnahmevorrichtung) gemäß einer vierten Ausführungsform der Erfindung;

Fig. 4b    eine perspektivische Ansicht eines Objekts (Aufnahmevorrichtung) gemäß einer fünften Ausführungsform der Erfindung ;

Fig. 4c    eine perspektivische Ansicht eines Objekts (Aufnahmevorrichtung) gemäß einer sechsten Ausführungsform der Erfindung;

Fig. 4d    eine perspektivische Ansicht eines Objekts (Aufnahmevorrichtung) gemäß einer siebten Ausführungsform der Erfindung;

Fig. 5    eine perspektivische Ansicht eines Objekts gemäß einer achten Ausführungsform der Erfindung;

Fig. 6    eine perspektivische Ansicht eines Objekts (Aufnahmevorrichtung) gemäß einer neunten Ausführungsform der Erfindung;

Fig. 7    eine perspektivische Ansicht eines Objekts (Aufnahmevorrichtung) gemäß einer zehnten Ausführungsform der Erfindung;

Fig. 8    eine perspektivische Ansicht einer Transportvorrichtung mit einer erfindungsgemäßen Erfassungseinrichtung;

Fig. 9    ein erster Graph mit einem erfassten Höhenprofil gemäß der Erfindung; und

Fig. 10    ein zweiter Graph mit mehreren erfassten Höhenprofilen gemäß der Erfindung.

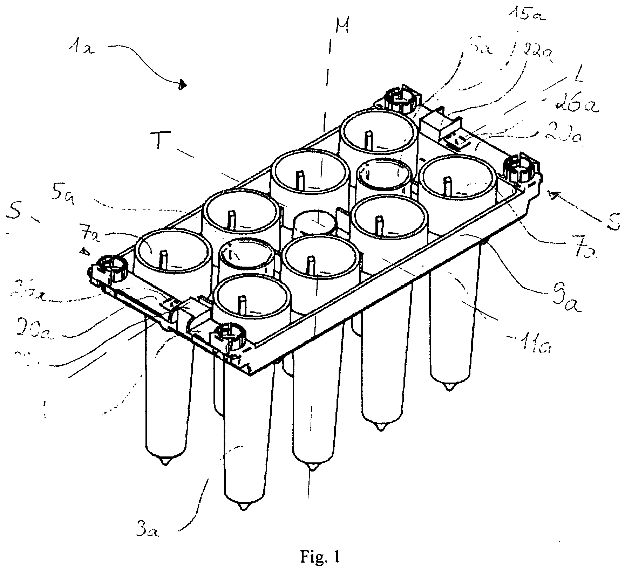

Fig. 1 zeigt ein erstes erfindungsgemäßes Objekt (Aufnahmevorrichtung) 1a. Das erste Objekt 1a ist ein prozessrelevantes Kunststoffteil, das in einem nicht gezeigten Gerät zum zur Aufreinigung bzw. Prozessierung und/oder Analyse von biologischen Zielmolekülen transportierbar ist. Das erste Objekt 1a weist acht Aufnahmebereiche 3a auf, in die beispielsweise ein Magnet eingeführt werden kann.

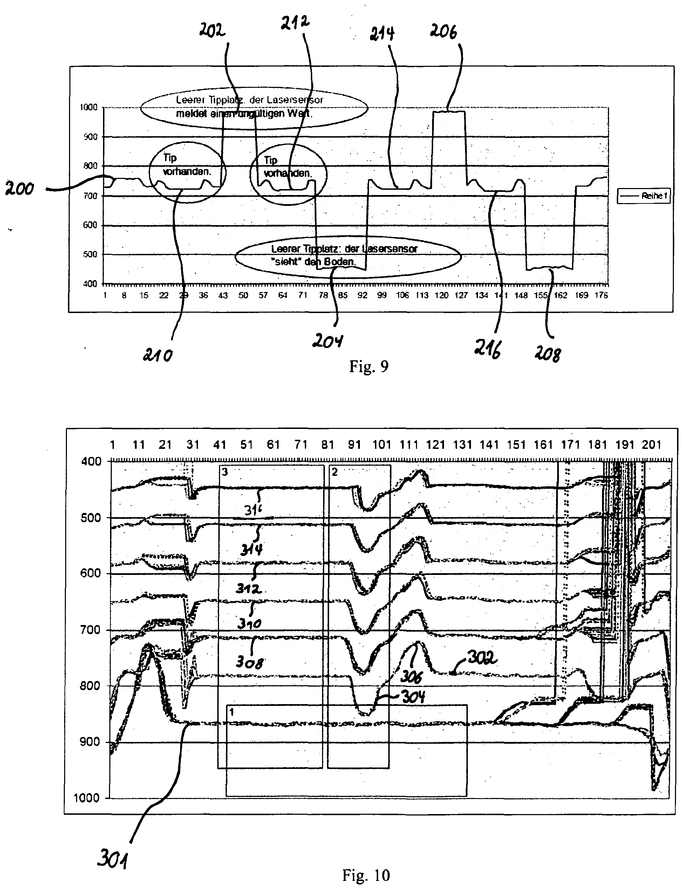

Das erste Objekt 1a weist zwei Durchlässe 5a auf. Die Durchlässe 5a dienen zur Aufnahme des ersten Objekts 1a durch eine Transportvorrichtung mit zwei Fingern, die durch die Durchlässe 5a geführt werden (siehe Figur 9 unten).

Das Objekt definiert eine Längsachse L, eine Mittelachse M, und eine Querachse T, die jeweils zueinander senkrecht stehen. Das Objekt, und insbesondere die Durchlässe 5a, sind annähernd axialsymmetrisch um die Mittelachse M, und (mit Ausnahme der Detektionsbereiche, siehe unten) spiegelsymmetrisch zu den Ebenen L-M und T-M gestaltet.

Die Aufnahmebehältnisse 3a haben jeweils an ihrem oberen Ende eine Öffnung 7a , deren oberer Rand auf gleicher Höhe wie der obere Rand der Durchlässe 5a geformt ist. "Oben" ist bei dem erfindungsgemäßen Objekt die Seite, auf der der Inhalt den Aufnahmebehältnissen 3a zugeführt oder entnommen werden kann. Um die Öffnungen 7a der acht Aufnahmebehältnisse 3a weist das Objekt 1a einen rechteckigen Rahmen 9a auf, mit zwei Längsseiten 11a parallel zur Längsachse L und zwei Querseiten 13a, 15a parallel zur Querachse T.

An den Querseiten 13a, 15a ist jeweils eine Erkennungsfläche bzw. ein Detektionsbereich angeordnet. Der Detektionsbereich weist einerseits einen für eine 1-Punkt-Messung vorgesehenen Bereich 20a mit einer gegenüber einer Referenzhöhe vorbestimmten Höhe auf. Die Referenzhöhe kann durch eine Auflagefläche oder Auflagekante des Objekts (etwa die Unter- oder Oberkante des Rahmens 9a) definiert sein. Die Höhe wird durch eine Messung des Abstands zwischen der Erfassungseinrichtung und dem Detektionsbereich bestimmt. Bei einer 1-Punkt-Messung ist der Erfassungseinrichtung ihre relative Lage zur Referenzhöhe bekannt, so dass die Höhe als der (vertikale) Abstand zwischen dem für die 1-Punkt-Messung vorgesehenen Bereich und der Referenzhöhe ermittelbar ist. Aus dieser Höhe kann sodann die Art des Objekts erkannt werden.

Die Detektionsbereiche, die sich jeweils entlang der sich gegenüberliegenden Querseiten 13a, 15a erstrecken, definieren darüber hinaus jeweils ein parallel zur Querachse T verlaufendes Höhenprofil. Der jeweilige Detektionsbereich umfasst einen Vorsprung mit einer Detektionsfläche 22a, den für die 1-Punkt-Messung vorgesehenen Bereich 20a, sowie eine Aussparung 26a und zwei Stege an Außenkanten des Vorsprungs mit der Detektionsfläche 22a. Der Vorsprung mit der Detektionsfläche 22a, die Aussparung 26a und die Stege bilden jeweils Kanten im Höhenprofil, deren Höhe und Position entlang der Querachse T als Identifikationsmerkmal relativ einfach und zuverlässig ausgelesen werden kann, und daher zur Identifikation der Objekte besonders geeignet sind.

Bei einem Erfassen des Objekts durch Abtasten des Höhenprofils entlang einer Linie entlang der Querseiten 13a, 15a (parallel zur Querachse T) genügt eine Messung der Höhe als vorzugsweise vertikaler Abstand zwischen der Erfassungseinrichtung (dessen Position relativ zu einer Referenzhöhe definiert ist) und dem entsprechenden Oberflächenstück des Detektionsbereichs. In diesem Fall ist die Identifikation des Objekts durch Erfassen und Auswerten von Kanten des Höhenprofils möglich, wie sie durch Abschnitte des Detektionsbereichs mit unterschiedlichen Höhen erzeugt werden und durch die Erfassungseinrichtung erkannt werden können.

Die Detektionsbereiche an der ersten und zweiten Querseite 13a, 15a sind axialsymmetrisch um die Mittelachse M angeordnet. Daher werden in beiden Detektionsbereichen ähnliche oder sogar gleiche Höhenprofile erhalten, sofern die Höhenprofile in jeweils entgegengesetzter Richtung S abgetastet werden. Dies erlaubt es, das Objekt auf eine beliebige spiegelverkehrte Weise anzuordnen, ohne dass dies einen Einfluss auf die Höhenmessung hätte. Auch erlaubt dies eine Messung durch Abtasten der Detektionsbereiche beider Querseiten 13a, 15a, wodurch die Positionierung des Objekts noch genauer erkannt werden kann.

Verschiedene Objekte können weiter durch unterschiedliche Höhen bei dem für die 1-Punkt-Messung vorgesehenen Bereich 20a oder durch ein unterschiedliches Höhenprofil entlang der Querseiten 13a, 15a identifiziert werden.

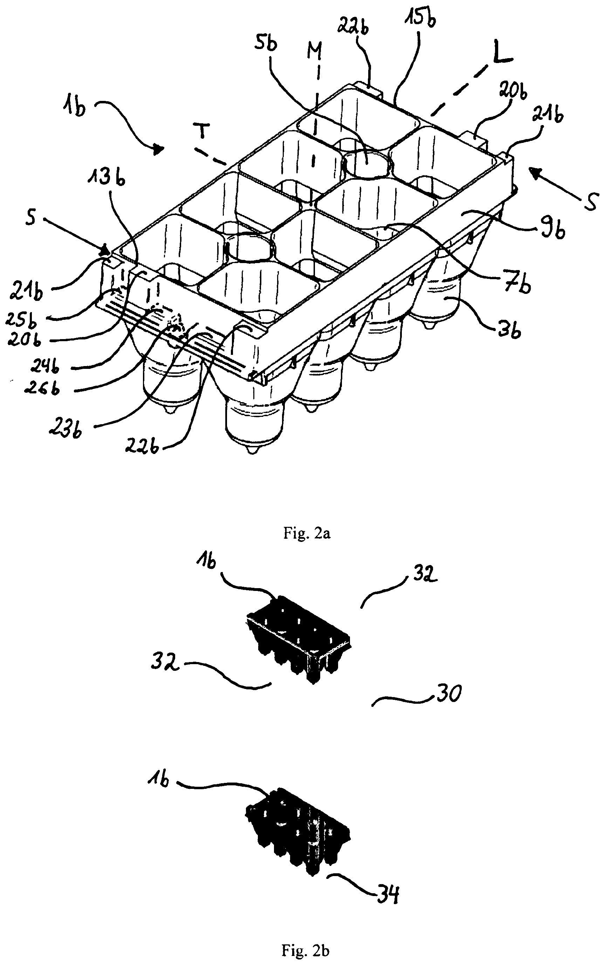

In Fig. 2a ist ein zweites erfindungsgemäßes Objekt 1b gezeigt. Bei dem zweiten erfindungsgemäßen Objekt 1b weisen Bereiche mit den gleichen Funktionen die gleichen Bezugsziffern wie das erste erfindungsgemäße Objekt 1a auf, nur mit einem "b" im Anschluss an die Ziffer statt einem "a". Bei dem zweiten erfindungsgemäßen Objekt 1b handelt es sich ebenso wie bei dem ersten erfindungsgemäßen Objekt um ein prozessrelevantes Kunststoffteil, genauer gesagt ein Proben-Aufnahmegefäß.

Bei dem zweiten Objekt 1b bilden Teile des Rahmens 9b zugleich auch den Rand jeweiliger Öffnungen 7b. Wie bei dem ersten Objekt 1a weist das zweite Objekt 1b entlang seiner Querseiten 13b, 15b einen Detektionsbereich mit einem für eine 1-Punkt-Messung vorgesehenen Bereich oder Vorsprung mit einer Detektionsfläche 20b und ein Höhenprofil für eine Mehrpunkt- oder Linienmessung auf, das Kanten (definiert durch Vorsprünge mit Detektionsflächen 20b, 21b, 22b, 23b, 24b, 25b mit unterschiedlichen Höhen) aufweist. In der Mitte der Querseiten 13b, 15b ist eine rechteckige Aussparung 26b gebildet. So misst eine Erfassungseinrichtung, wenn sie den linken Detektionsbereich in Abtastrichtung S im Rahmen einer Linienmessung erfasst, in etwa das folgende Höhenprofil: hoher Bereich, tiefer Bereich, hoher Bereich, tiefer Bereich, Aussparung, tiefer Bereich, hoher Bereich. Dabei können die jeweiligen Bereiche (definiert durch Vorsprünge mit den Detektionsflächen 20b, 21b, 22b, 23b, 24b, 25b) unterschiedliche Längen entlang der Querseite 13b, 15b des zweiten Objekts aufweisen. Durch die Lage und Art von Kanten, die sich aus unterschiedlichen Längen entlang der Querseite und den unterschiedlichen Höhen der Detektionsflächen der Vorsprünge bzw. der Aussparung ergeben, kann die Art des Objekts identifiziert werden.

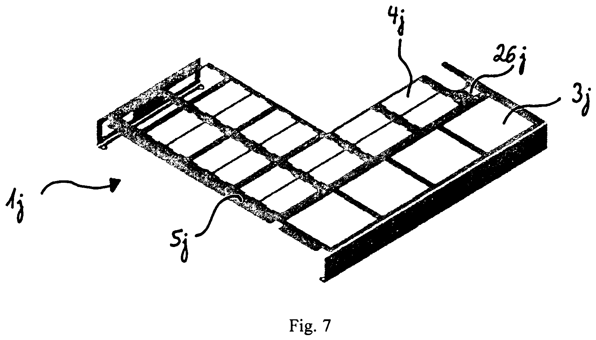

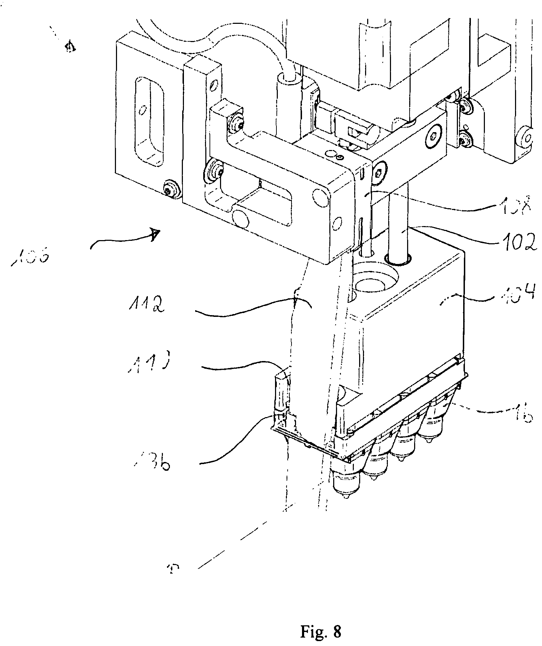

Fig. 2b zeigt ein Aufnahmebehältnis 30 insbesondere für die erfindungsgemäßen Objekte 1a und 1b, wobei in der Figur 2b selber nur Objekte 1b im Aufnahmebehältnis zu sehen sind. Das Aufnahmebehältnis 30 ist eine Verpackungseinheit insbesondere für die Vorratsgefäße 1a oder 1b und ist in ein Gerät zum Prozessieren von biologischem Material einsetzbar oder einsteckbar, beispielsweise in eine in Fig. 7 gezeigte Schublade desselben. Das Aufnahmebehältnis 30 weist zwei Teilbereiche 32 auf, die jeweils ein oder mehrere gestapelte Objekte aufnehmen können. So zeigt der linke Teilbereich in Fig. 2 das unterste und das oberste Objekt aus einem Stapel, wobei die dazwischenliegenden Objekte nicht dargestellt sind. Eine Transportvorrichtung (siehe Fig. 8) kann dann ein oder mehrere Objekte gleichzeitig dem Aufnahmebehältnis 30 entnehmen oder in diesem ablegen.

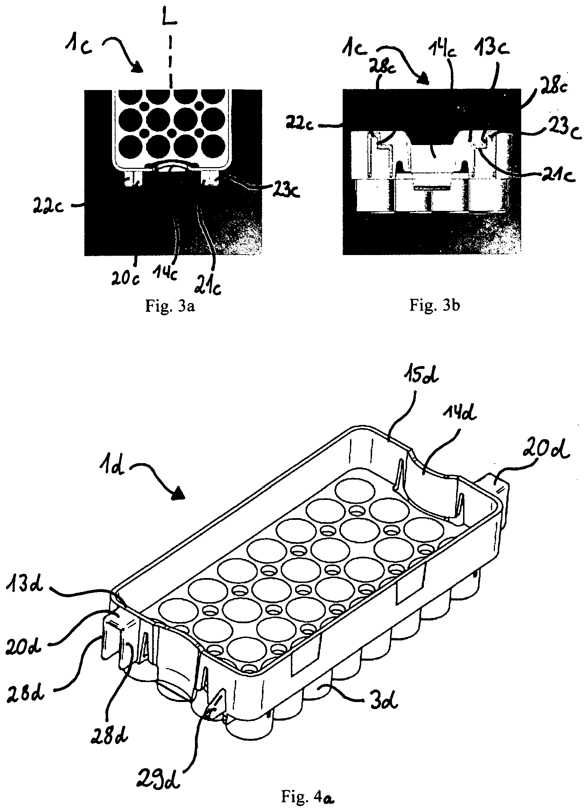

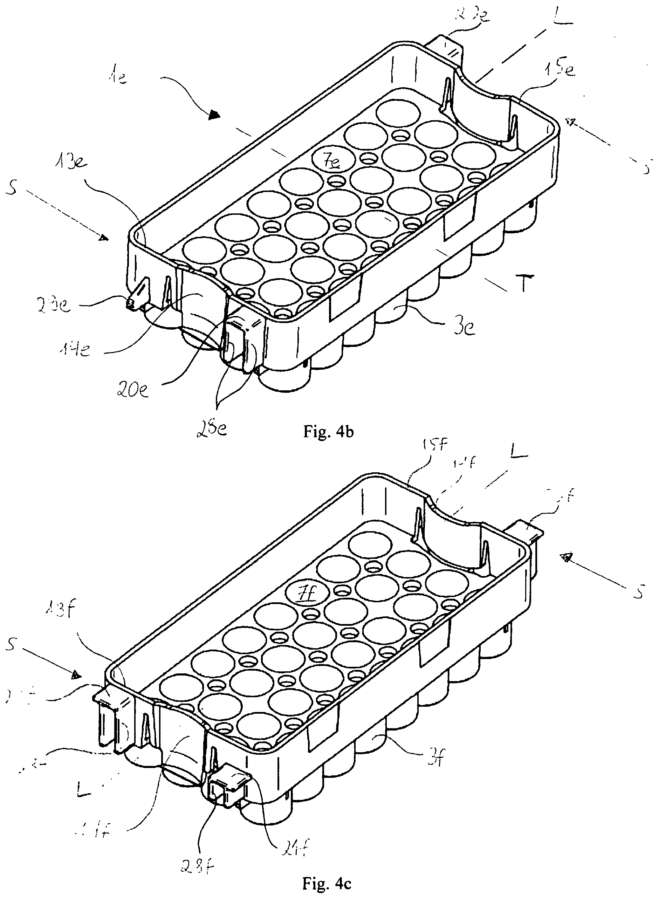

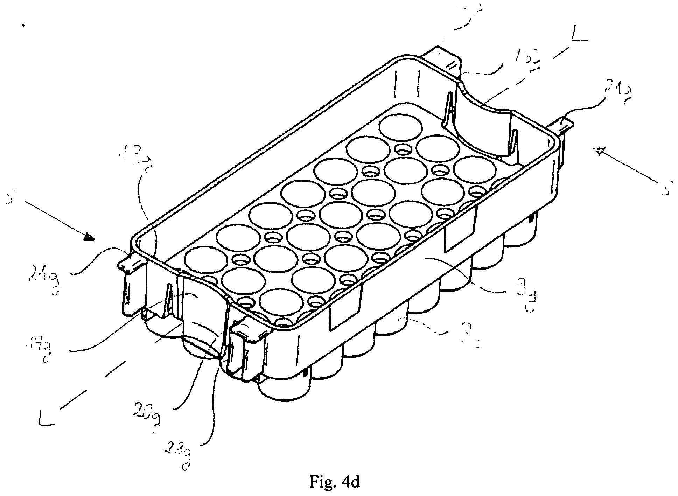

Fig. 3a und 3b zeigen ein drittes, Fig. 4 ein viertes, Fig. 4b ein fünftes, Fig. 4c ein sechstes und Fig. 4d ein siebtes erfindungsgemäße Objekt 1c, 1d, 1e, 1f, 1g. Bei dem dritten, vierten, fünften, sechsten und siebten erfindungsgemäßen Objekt 1c, 1d, 1e, 1f, 1g weisen Bereiche mit den gleichen Funktionen die gleichen Bezugsziffern wie das erste erfindungsgemäße Objekt 1a auf, nur mit einem "c", "d", "e", "f" bzw. "g" im Anschluss an die Ziffer statt einem "a". Die Objekte der Figuren 3a bis 4d sind mit Ausnahme der Identifikationselemente jeweils gleich oder ähnlich gestaltet.

Das dritte Objekt 1c von Fig. 3a weist an seiner Querseite 13c einen Detektionsbereich für eine Linienmessung auf, der zwei symmetrisch, vorzugsweise spiegelsymmetrisch, zu der Symmetrielinie in Längsrichtung L angeordnete Vorsprünge umfasst, die jeweils eine erste Identifikationsfläche 20c, 21c und eine zweite Identifikationsfläche 22c, 23c aufweisen, wobei die zweiten Identifikationsflächen eine andere Höhe aufweisen als die ersten Identifikationsflächen und vorzugsweise die ersten Identifikationsflächen höher als die zweiten Identifikationsflächen sind. Die ersten Identifikationsflächen 20c, 21c grenzen direkt an die zweiten 22c, 23c Identifikationsflächen an. Zwischen den ersten Identifikationsflächen 20c, 21c und den zweiten Identifikationsflächen 22c, 23c ist jeweils eine Verbindungsfläche 28c angeordnet, die die ersten Identifikationsflächen 20c, 21c mit den zweiten Identifikationsflächen 22c, 23c verbindet, so dass eine Kante zwischen Verbindungsfläche (an dieser Fläche wird nichts ausgerichtet) 28c und den Identifikationsflächen gebildet wird. An der Querseite 13c ist ferner ein flexibler Druckbereich 14c zum Drücken durch den menschlichen Finger angeordnet. Zur besseren Erreichbarkeit des Druckbereichs 14c befindet sich in dessen Nähe eine Lücke zwischen den Identifikationsflächen 20c und 21c, die an die Erfordernisse der Erreichbarkeit angepasst ist..

Die erste Identifikationsflächen 20c/22c ist dabei vorzugsweise auf einer Seite einer die Oberfläche im Wesentlichen halbierenden Ebene, in der die Längsachse L liegt, angeordnet, während die zweite Identifikationsfläche 21c/23c auf der anderen Seite dieser Ebene angeordnet ist. Die Identifikationsfläche 20c/22c an der Querseite 13c ist vorzugsweise rotationssymmetrisch zur Identifikationsfläche 20c/22c an der Querseite 15c (nicht abgebildet) angeordnet, so dass die Frontansichten der beiden Querseiten 13c und 15c zumindest im Hinblick auf die Position dieser Identifikationsflächen gleich sind. Das analoge gilt für die Identifikationsfläche 21c/23c.

In einer weiteren Ausführungsform (ohne Abbildung) kann die erste Identifikationsfläche 20c/21c kombiniert werden mit einem Vorsprung 29c, oder einer nur eine Fläche aufweisenden Identifikationsfläche 22c oder 23c kombiniert sein, wobei deren Länge sich optional von der der Flächen 20c bzw. 21c unterscheiden kann.

Das vierte erfindungsgemäße Objekt 1d, das in der Figur 4a gezeigt ist, weist jeweils einen Vorsprung mit einer Identifikationsfläche 20d an den Querseiten 13d, 15d auf. Auf beiden Seiten der Identifikationsfläche 20d weist der Vorsprung senkrechte bzw. orthogonal zu der Identifikationsfläche 20d ausgerichtete Verbindungsflächen 28d, auf, die jeweils eine Kante gemeinsam mit der Identifikationsfläche 20d haben. Ferner kann das vierte erfindungsgemäße Objekt einen weiteren Vorsprung 29d aufweisen, der zum Absetzten des vierten Objekts 1d dient. Er kann so dimensioniert sein, dass er durch eine Erfassungsvorrichtung, die das Höhenprofil entlang der Querseiten erfasst, nicht erfasst wird. So kann beispielsweise durch eine Linienmessung des Höhenprofils entlang einer Querseite eines Objekts die Art des Objekts erkannt werden, damit ein Objekt von einem anderen Objekt (etwa das dritte Objekt 1c von dem vierten Objekt 1d) unterschieden werden kann.

Die Identifikationsfläche 20d ist dabei vorzugsweise auf einer Seite einer die Oberfläche im Wesentlichen halbierenden Ebene, in der die Längsachse L liegt, angeordnet, während der Vorsprung 29d auf der anderen Seite dieser Ebene angeordnet ist. Die Identifikationsfläche 20d an der Querseite 13d ist vorzugsweise rotationssymmetrisch zur Identifikationsfläche 20d an der Querseite 15d angeordnet, so dass die Frontansichten der beiden Querseiten 13d und 15d zumindest im Hinblick auf die Position dieser Identifikationsflächen gleich sind. Das analoge gilt für den Vorsprung 29d.

In Fig. 4b wird das fünfte erfindungsgemäße Objekt 1e gezeigt. Es weist wie das vierte Objekt 1d jeweils einen Vorsprung mit einer Detektionsfläche 20e und zwei Verbindungsflächen 28e auf. Ebenso wie das vierte Objekt 1d weist das fünfte Objekt 1e einen Vorsprung 29e zum Absetzten des fünften Objekts 1e auf.

Die Identifikationsfläche 20e des fünften Objekts 1e ist spiegelverkehrt zu einer Längsachse L wie die Identifikationsfläche 20d des vierten Objekts angeordnet. So könenn auf einfache Weise das vierte und fünfte Objekt 1d, 1e erkannt werden (d.h. von Objekten anderen Typs und voneinander unterschieden werden).

Die Identifikationsfläche 20e ist dabei vorzugsweise auf einer Seite einer die Oberfläche im Wesentlichen halbierenden Ebene, in der die Längsachse L liegt, angeordnet, während der Vorsprung 29e auf der anderen Seite dieser Ebene angeordnet ist. Die Identifikationsfläche 20e an der Querseite 13e ist vorzugsweise rotationssymmetrisch zur Identifikationsfläche 20e an der Querseite 15e angeordnet, so dass die Frontansichten der beiden Querseiten 13e und 15e zumindest im Hinblick auf die Position dieser Identifikationsflächen gleich sind. Das analoge gilt für den Vorsprung 29e.

In Fig. 4c wird das sechste erfindungsgemäße Objekt 1f gezeigt. Es weist an seinen Querseiten 13f, 15f jeweils zwei Vorsprünge mit einer ersten Identifikationsfläche 20f bzw. einer zweiten Identifikationsfläche 21f auf. Die beiden Identifikationsflächen weisen unterschiedliche Höhen auf, wobei die erste Identifikationsfläche 20f vorzugsweise höher ist als die zweite Identifikationsfläche 21 f und die erste Identifikationsfläche 20f ist auf der einen Seite der Symmetrielinie in Längsrichtung L und die zweite Identifikationsfläche 21 f auf der anderen Seite der Symmetrielinie in Längsrichtung L angeordnet. In Richtung der Symmetrielinie in Längsrichtung weisen die Vorsprünge angrenzend an die Identifikationsflächen 20f, 21f jeweils eine Verbindungsfläche 28f auf, die mit den Identifikationsflächen jeweils eine gemeinsame Kante hat.

Die Identifikationsfläche 20f ist dabei vorzugsweise auf einer Seite einer die Oberfläche im Wesentlichen halbierenden Ebene, in der die Längsachse L liegt, angeordnet, während die Identifikationsfläche 21 f auf der anderen Seite dieser Ebene angeordnet ist. Die Identifikationsfläche 20f an der Querseite 13f ist vorzugsweise rotationssymmetrisch zur Identifikationsfläche 20f an der Querseite 15f angeordnet, so dass die Frontansichten der beiden Querseiten 13f und 15f zumindest im Hinblick auf die Position dieser Identifikationsflächen gleich sind. Das analoge gilt für die Identifikationsfläche 21 f. Die Identifikationsfläche 20f ist vorzugsweise höher angeordnet als die Identifikationsfläche 21 f.

In Fig. 4d wird das siebte erfindungsgemäße Objekt 1g gezeigt. Es weist an seinen Querseiten 13g, 15g jeweils zwei Vorsprünge mit einer ersten Identifikationsfläche 20g bzw. einer zweiten Identifikationsfläche 21g auf. Die erste Identifikationsfläche 20g ist in Abtastrichtung S länger als die zweite Identifikationsfläche 21g und die erste Identifikationsfläche 20g ist auf der einen Seite der Symmetrielinie in Längsrichtung L und die zweite Identifikationsfläche 21g auf der anderen Seite der Symmetrielinie in Längsrichtung L angeordnet. In Richtung der Symmetrielinie in Längsrichtung weisen die Vorsprünge angrenzend an die erste Identifikationsfläche 20g eine Verbindungsfläche 28g auf, die mit den Identifikationsflächen jeweils eine gemeinsame Kante hat. Die beiden Identifikationsflächen 20g, 21g sind etwa auf einer Höhe wie ein obere Rand eines Rahmens 9g des siebten Objekts 1g angeordnet. In diesem Fall dienen die Größen bzw. Längen in Abtastrichtung zur Erkennung des siebten Objekts.

Die Identifikationsfläche 20g ist dabei vorzugsweise auf einer Seite einer die Oberfläche im Wesentlichen halbierenden Ebene, in der die Längsachse L liegt, angeordnet, während die Identifikationsfläche 21g auf der anderen Seite dieser Ebene angeordnet ist. Die Identifikationsfläche 20g an der Querseite 13g ist vorzugsweise rotationssymmetrisch zur Identifikationsfläche 20g an der Querseite 15g angeordnet, so dass die Frontansichten der beiden Querseiten 13g und 15g zumindest im Hinblick auf die Position dieser Identifikationsflächen gleich sind. Das analoge gilt für die Identifikationsfläche 21g. Die Identifikationsfläche 20g weist vorzugsweise eine größere Länge auf als die Identifikationsfläche 21g.

Die Objekte aus den Fig. 3a/b und 4a, 4b, 4c, 4d zeigen Pipettenspitzen-Aufnahmegefäße. Indem die Höhenprofile in Abhängigkeit der Größe und Art der Pipettenspitzen variieren, kann aus dem Höhenprofil schließlich die Größe und Art der in dem Objekt befindlichen Pipettenspitzen identifiziert werden.

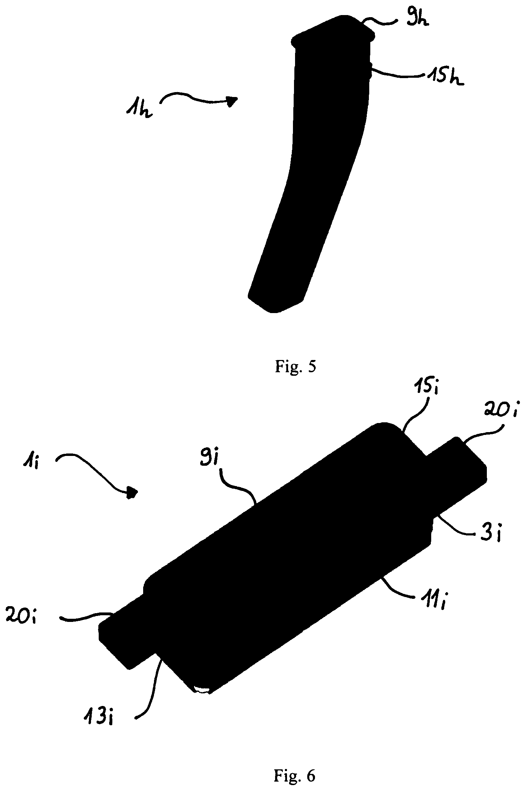

In Figur 5 wird ein achtes Objekt 1h gezeigt. Es handelt sich um einen Abfallkanal für Verbrauchsmaterialien wie -Pipettenspitzen oder Chemikalien. Der Abfallkanal 1h weist an seinem oberen Ende 15h einen kragenförmigen Rand 9h auf. Der kragenförmige Rand 9h dient als Anschlag bei einem Durchstecken des Abfallkanals 1h in eine für den Abfallkanal 1h vorgesehene Öffnung in einer Schublade oder einem Arbeitstisch, so dass der kragenförmige Rand 9h des Abfallkanals 1h direkt auf einem Rand der Öffnung aufliegt. Der Abfallkanal 1h ist durch die äußeren Abmessungen, insbesondere die Dicke, des kragenförmigen Rands 9h identifizierbar. So kann mit einer 1-Punkt-Messung die Anwesenheit oder die Abwesenheit des Abfallkanals festgestellt werden, indem in dem Bereich auf einer Arbeitsplatte, einer Schublade oder ähnlichem, in dem der kragenförmige Rand 9h auf der Schublade der dem Arbeitstisch aufliegen sollte, die Höhe gemessen wird. Die Höhe ist davon abhängig, ob der Abfallkanal 1h an seinem vorgesehenen Platz ist oder nicht, und kann daher zur Abfrage dieser Auskunft verwendet werden.

In Fig. 6 wird ein neuntes erfindungsgemäßes Objekt 1i in Form eines Pipettenspitzen-Halters gezeigt. Bereiche mit den gleichen Funktionen weisen die gleichen Bezugsziffern wie das erste erfindungsgemäße Objekt 1a auf, nur mit einem "f" im Anschluss an die Ziffer statt einem "a". Der Pipettenspitzen-Halter 1i kann zur Reinigung aus einem Prozessraum bzw. von einem Prozesstisch bzw. einer Schublade entfernt werden und weist mehrere Aufnahmebereiche 3i zur Aufnahme von Pipettenspitzen auf. Um Festzustellen, ob der Pipettenspitzen-Halter 1i an seinem Platz in dem Prozessraum bzw. auf dem Prozesstisch angeordnet ist, weist es an seinen Querseiten 13i, 15i eine Erkennungs- und Justageausprägung 20i als Detektionsbereich auf. Mittels einer 1-Punkt-Messung wie im Falle des Abfallkanals kann die Anwesenheit des Pipettenspitzen-Halters festgestellt werden. Durch ein Erfassen des Höhenprofils an beiden Querseiten 13i, 15i kann zusätzlich festgestellt werden, ob der Pipettenspitzen-Halter korrekt an seinem Platz angeordnet wurde, also ob er beispielsweise nicht verkantet ist.

Fig. 7 zeigt ein zehntes erfindungsgemäßes Objekt 1j in Form eines Schubladenoberteils. Das Schubladenoberteil 1j weist eine Vielzahl von Aufnahmeöffnungen 3j, 4j auf, die in verschiedenen Größen dimensioniert sind. So können beispielsweise ein Abfallkanal gemäß Fig. 5, ein erstes, zweites, drittes, viertes, sechstes, siebtes oder achtes erfindungsgemäßes Objekt oder ein Aufnahmebehältnis 30 in einer der Aufnahmeöffnungen 3j oder 4j angeordnet sein. Zusätzlich weist eine Oberfläche 5j des Schubladenoberteils 1j an einem Randbereich des Schubladenoberteils 1j einen Detektionsbereich mit einer viereckigen, vorzugsweise rechteckigen Aussparung 26j auf. Aus einer genauen Position der Aussparung 26j, bzw. der Positionen der Ränder der vorzugsweise rechteckigen Aussparung 26j kann die Position der Schublade 1g bestimmt werden. Das Messen der Position weiterer Aussparungen kann eine verbesserte Bestimmung der Position und/oder der Ausrichtung der Schublade 1j erlauben. Die Erkennung weiterer Objekte, die in oder an der Schublade untergebracht sind, kann in Abhängigkeit der Positions- und / oder Ausrichtungs-Messung der Schublade erfolgen. Beispielsweise kann die Position, an der eine Linien- oder 1-Punkt-Messung etwa zur Identifikation eines solchen Objekts durchgeführt werden soll, in Abhängigkeit des Ergebnisses der Positions- und / oder Ausrichtungs-Messung der Schubladegewählt werden.

Die Erfassungseinrichtung umfasst vorzugsweise einen Lasertaster mit einem Laseremitter und einer versetzt dazu angeordneten Photodiodenzelle. Ein solcher Lasertaster ist etwa von der Firma Baumer erhältlich (Modell-Nr OADM 13I6480/S35A oder OADM 13I6475/S35A).

Zur Distanzmessung mit einem solchen Lasertaster kann ein Triangulationsverfahren verwendet werden. Bei dem Triangulationsverfahren wird ein Laserstrahl im Wesentlichen senkrecht auf das zu scannende Objekt gerichtet. Der dort erscheinende Punkt wird über eine Optik auf die Photodiodenzelle projiziert. Der Abstand des Objekts wird sodann im Sensor aufgrund des Eintrittswinkels (Position des auf der Photodiodenzelle abgebildeten Punktes) berechnet.

Alternativ kann die Erfassungseinrichtung auch durch andere Vorrichtungen zur Abstandsmessung realisiert werden. So kann eine alternative Ausführungsform der Erfassungseinrichtung ebenso auf einer Vorrichtung zur Laser-Laufzeitmessung oder zur Laser-Interferenzmessung oder zur Ultraschall-Messung (mit Ultraschall-Sensor und -Emitter), oder auf eine Kombination mehrerer verschiedener solcher Vorrichtungen beruhen.

Die Figur 8 zeigt eine Transportvorrichtung 100. Weiter zeigt Figur 8 ein Objekt 1b (siehe Figur 2a), das durch die Transportvorrichtung aufgenommen ist. Es können durch die Transportvorrichtung 100 auch andere Objekte aufgenommen und getragen werden. Das zweite Objekt ist nur als Beispiel genannt. Die Transportvorrichtung ist derart ausgebildet, dass zwei Stifte 102 der Transportvorrichtung in die entsprechenden Öffnungen des Objekts 1b eingeschoben und mit dem Objekt in Eingriff gebracht sind. Dies ermöglicht ein Anheben des zweiten Objekts. Die Transportvorrichtung kann nicht nur ein Objekt, sondern auch mehrere Objekte, die übereinander gestapelt sind, gleichzeitig aufnehmen und tragen. Über dem zweiten Objekt 1b ist ein Gewichtsteil 104 gezeigt. Das Gewichtsteil 104 ist zum Absetzten der Objekte 1b vorgesehen, und entlang einer Längserstreckung verschiebbar. Seitlich an der Transportvorrichtung 100 ist eine erfindungsgemäße Erfassungsvorrichtung 106 mit einem Lasertaster 108 angeordnet. Der Lasertaster ist wie oben beschrieben und kann durch einen anderen Sensor zur Abstandsmessung ersetzt werden. Der Lasertaster 108 ist so angeordnet, dass er einen Abstand eines an der Querseite 13b des Objekts 1b angeordneten Detektionsbereichs messen kann. Zu diesem Zweck kann das Gewichtsteil 104 derart geformt sein, dass es eine Aussparung 110 aufweist, so dass durch den Lasertaster 108 ausgestrahlte Laserstrahlen 112 nicht durch das Gewichtsteil 104 behindert werden.

Im Folgenden soll beschrieben werden, wie eine 1-Punkt-Messung, d.h. eine Höhenmessung an einem diskreten Punkt des Objekts, für sich allein genommen zur Bestimmung der Anzahl, der Raumposition, der Anwesenheit, des Zustandes und / oder der Art des Objekts, insbesondere zur gemeinsamen Bestimmung mehrerer dieser Parameter herangezogen werden kann.

Zur Ermittlung der Höhe $h_T$ bei der 1-Punkt-Messung kann die Erfassungseinrichtung 106 den vertikalen Abstand zwischen dem Lichttaster und einem Detektionsbereich des Objekts ermitteln, und von dem vertikalen Abstand zwischen dem Lichttaster und einer Referenzhöhe R (etwa der Arbeitsplatte oder einer Oberkante des Verriegelungsmechanismus der Transportvorrichtung 100, siehe Fig. 8). Es ist auch möglich, direkt aus dem vertikalen Abstand zwischen dem Lichttaster und dem Detektionsbereich des Objekts die Anzahl, die Raumposition, die Anwesenheit, den Zustand und / oder die Art des Objekts zu bestimmen, wenn die entsprechenden Werte charakteristisch für den jeweiligen Parameter und das entsprechende Objekt sind.

Aus der ermittelten Höhe $h_T$ kann die Anzahl von auf der Arbeitsplatte befindlichen oder durch die Transportvorrichtung aufgenommenen Objekte berechnet werden. Dies wird dadurch bewerkstelligt, dass die Stapelhöhe $h_{SO}$ und eine Identifikationshöhe d zur Identifizierung in Frage kommender Objekte abgerufen wird, und über die Formel

$$h_T = (n - 1) \times h_{SO} + d,$$

mit der gemessenen Höhe verglichen wird, wobei n die Anzahl der gestapelten Objekte angibt. Bei geeigneter Wahl der Parameter ($h_{SO}$, d) pro Objekt und bei hinreichender Messgenauigkeit erlaubt die obige Formel, aus dem gemessenen Höhenwert $h_T$ sowohl das Parameterpaar ($h_{SO}$, d) und somit die Art des sich auf der Transportvorrichtung bzw. der Arbeitsplatte befindlichen Objekts, als auch die Anzahl der gestapelten Objekte n eindeutig zu bestimmen.

Beispiel: Es kommen zwei verschiedene Arten von Objekten in Frage, und für Objekt 1 ist ($h_{SO}$; d) = (10, 2); für Objekt 2 ist ($h_{SO}$; d) = (5, 3). Dann lässt sich aus dem gemessenen Wert $h_T$=28 eindeutig bestimmen, dass Objekt 2 vorliegt und n=6 ist, da dies die einzige Lösung der obigen Gleichung für ganzzahlige n ist.

Auf diese Weise lässt sich etwa feststellen, welche Objekte sich in welcher Anzahl in dem Prozessraum befinden, oder durch die Transportvorrichtung aufgenommen wurden. Dies erlaubt eine Erhöhung der Zuverlässigkeit der Transportvorrichtung, da der Transportprozess überwacht und insbesondere festgestellt werden kann, welche und wie viele Objekte durch die Transportvorrichtung aufgenommen oder abgegeben wurden.

Ferner kann die an der Transportvorrichtung 100 angeordnete Erfassungseinrichtung 106 dazu dienen, eine Anwesenheit eines Abfallkanals 1h oder eines Pipettenspitzen-Halters 1i über eine 1-Punkt Messung zu bestimmen. Dazu wird die Transportvorrichtung über einen vorbestimmten Bereich des Prozessraums oder des Prozesstischs gefahren, an dem ein Detektionsbereichs 9h, 20i des Abfallkanals 1h bzw. des Pipettenspitzen-Halters 1i vermutet wird. Anschließend werden eine oder mehrere 1-Punkt-Messungen zur Bestimmung des Abstands zwischen der Erfassungseinrichtung und dem Detektionsbereich durchgeführt und das Ergebnis ausgewertet, indem der erfasste Abstand mit einer Referenzhöhe verglichen wird und aus dem Vergleich ermittelt wird, ob ein Detektionsbereich 9h, 20i des Abfallkanals 1h bzw. des Pipettenspitzen-Halters 1i vorhanden ist oder nicht.

Die Erfassungseinrichtung dient nicht nur zum Identifizieren der durch die Transportvorrichtung 100 aufgenommenen Objekte sondern auch zum Inventarisieren von in einem Prozessraum angeordneten Objekten.

Hierzu wird bei Objekten, die zur Unterscheidung voneinander ein Höhenprofil an einer Querseite aufweisen, wie die erfindungsgemäßen Objekte 1a, 1b, 1c, 1d, 1e, 1f und 1g die Erfassungseinrichtung so über das Querseiten 13a-g geführt, dass der Sensor durch Messungen mehrerer Höhen ein Höhenprofil erstellen kann. Beispielsweise kann die Erfassungseinrichtung mittels eines Aktors mit Wegüberwachung, Wegmesseinrichtung, Wegregelung und/oder Wegsteuerung wie z.B. mittels eines Schrittmotors entlang einer Linie bewegt werden, und pro zuvor definierten Wegabschnitten oder pro definierter Anzahl von zuvor definierten Wegabschnitten wird eine (oder mehrere) Höhenmessung durchgeführt. Aus diesen Höhenmessungen ergibt sich sodann ein Höhenprofil entlang der Linie, entlang derer die Erfassungseinrichtung bewegt wurde.

Über dieses Höhenprofil wird das Objekt identifiziert. Hierzu wird eine Signalauswertung vorgenommen, die auf der Erkennung von Kanten und dem Analysieren von Geraden basiert. Das Finden der Kanten erfolgt etwa mittels Polynom-Fitting. Der dabei ermittelte Wendepunkt wird als Kantenposition gemeldet. Insbesondere die Position und Art der Kantenposition wird sodann mit vorgegebenen Werten, die für jedes in Frage kommende Objekt in der Erfassungseinrichtung abgespeichert sind, verglichen, und es wird daraus ein Ähnlichkeitsmaß errechnet. Dieses Ähnlichkeitsmaß wird dann zur Bestimmung des Objektes herangezogen.

Ebenso wie auf der Transportvorrichtung kann durch einen Abstand zwischen dem am nächsten zu der Erfassungseinrichtung 106 angeordneten Objekt, das durch sein an der Querseite 13b angeordnete Höhenprofil identifiziert worden ist, und einer Referenzhöhe, die beispielsweise durch einen Arbeitstisch oder einen Boden 34 des Aufnahmebehältnisses 30 definiert wird, die Anzahl der gestapelten Objekte (etwa in einem Aufnahmebehältnis, siehe Fig. 2b, oder auf dem Prozesstisch) durch die Erfassungseinrichtung 106 berechnet werden.

Die Linienmessung erlaubt es ferner, die Position und Ausrichtung einer Schublade gemäß Fig. 7 durch Erfassen und genaues Vermessen eines Detektionsbereichs 26j zu bestimmen. Hierzu wird eine an einer Transportvorrichtung oder anderweitig angeordnete Erfassungseinrichtung an die Position gefahren, an der die Aussparung 26j vermutet wird. Anschließend werden von der vorbestimmten Position aus zwei zueinander orthogonale Höhenprofile erstellt (in horizontaler x- und y-Richtung), dadurch, dass der Sensor von der vorbestimmten Position zunächst in die x-Richtung und dann in die y-Richtung bewegt wird und währenddessen laufend Höhenmessungen durchgeführt werden. Vorzugsweise wird dies einige Male, etwa fünf Mal, wiederholt, um die Höhenprofile mit hoher Genauigkeit zu erhalten. Anhand der zwei zueinander orthogonalen Höhenprofile kann die genaue Position zweier zueinander orthogonaler Kanten der Aussparung 26j bestimmt werden. Aus den Kantenpositionen kann die Position des Schubladenoberteils 1j ermittelt werden. Die erfasste Position des Schubladenoberteils kann für weitere Messungen und/oder für das Prozessieren mit dem erfindungsgemäßen Apparat als Referenzpunkt oder als Referenzhöhe dienen.

Es können mehrere derartige Aussparungen vermessen werden, etwa um neben der Position auch die Ausrichtung des Schubladenoberteils 1j zu ermitteln. Ebenfalls kann in diesem Fall auch ermittelt werden, ob sich das Schubladenoberteil 1g verbogen oder verzogen hat, so dass Fahrwege etwa der Transportvorrichtung auf die genaue Lage des Schubladenoberteils 1g angepasst werden können.

Zur Inventarisierung werden die Detektionsbereiche mehrerer Objekte, die etwa in eine Schublade gemäß Fig. 7 eingesetzt sind, erfasst und die Objekte identifiziert. Optional werden Aufnahmeöffnungen oder -bereiche der Objekte durch die Erfassungseinrichtung erfasst, um eine Bestückung der Objekte etwa mit Verbrauchsmaterialien festzustellen. Etwa im Fall einer Pipettenspitzenaufnahme wie in Fig. 3a-4d und 6 dargestellt können etwa Höhenwerte bei den einzelnen Aufnahmebehältnissen 3c, 3d, 3f für Pipettenspitzen erfasst werden, und aus den Höhenwerten kann ermittelt werden, ob darin jeweils eine Pipettenspitze vorhanden ist.

Fig. 9 zeigt ein durch eine Erfassungsvorrichtung erfasstes Höhenprofil 200, das zur Inventarisierung von in einem Pipettenspitzenhalter (z.B. einem der in Fig. 3a bis 4d gezeigten Objekte) gehaltenen Pipettenspitzen verwendet werden kann. Die Abszisse stellt die abgetastete Strecke des Objekts dar (hier entlang einer geraden Linie, die insgesamt acht Aufnahmebereiche zur Aufnahme der Pipettenspitzen, etwa 7e in Fig. 4b, überstreicht). Die Ordinate sind die gemessenen Höhenwerte. Jedem Aufnahmebereich ist ein gemessener jeweiliger Bereich 210, 202, 212, 204, 214, 206, 216 und 208 zugeordnet.

In dem Messbeispiel von Fig. 9 ist von den entlang der gemessenen Linie angeordneten acht Aufnahmebereichen nur jeder zweite Aufnahmebereich mit einer Pipettenspitze bestückt. Falls der Sensor einen ungültigen Wert wie beispielsweise in den Bereichen 202 und 206 oder den Boden in einem Aufnahmebereich wie beispielsweise in den Bereichen 204 und 208 des Höhenprofils 200 erfasst, so schließt die Erfassungsvorrichtung daraus (die Erfassungseinrichtung schließt nichts daraus, höchstens das Gerät, die Erfassungseinrichtung besteht nur aus Strahlequelle und Sensor)), dass in diesem Aufnahmebereich keine Pipettenspitze angeordnet ist. Die erfassten nach oben abweichenden Höhenwerte können zum Beispiel durch Reflektionen oder Spiegelungen erzeugt werden und stellen ungültige Werte dar(dadurch erkennbar, dass sie außerhalb eines vorbestimmten Toleranzintervalls liegen). Die erfassten nach unten abweichenden Höhenwerte können beispielsweise durch ein Erfassen des Bodens, wie einem Schubladenboden, erzeugtr werden. Erfasst der Sensor hingegen eine nur geringe (innerhalb eines vorbestimmten Toleranzintervalls liegende) Höhendifferenz zwischen der Höhenmessung im Aufnahmebereich und den den Aufnahmebereich umgebenen Bereich, wie in den Bereichen 210, 212, 214 und 216, so erkennt die Erfassungsvorrichtung durch Vergleich mit in der Erfassungsvorrichtung hinterlegten Werten, dass eine Pipettenspitze in dem jeweiligen Aufnahmebereich angeordnet ist. Somit kann durch einfaches Abtasten festgestellt werden, mit wie vielen Pipettenspitzen und an welchen Aufnahmebereichen ein erfindungsgemäßes Objekt gemäß den Fig. 3a bis 4d bzw. 6 bestückt ist.

Fig. 10 zeigt einen zweiten Graph mit mehreren gemäß der Erfindung erfassten Höhenprofilen. Die Abszisse ist die Strecke entlang einer Abtastrichtung S einer Linienmessung (siehe etwa Fig. 1, 2). Die Ordinate stellt die erfasste Höhe dar.

Das gemessene Höhenprofil 301, das das (einmal zu viel) keinen erhöhten oder erniedrigten Bereich aufweist, wird bei Messung eines leeren Aufnahmebehältnisses 30 (siehe Fig. 2b) erhalten. Es gibt den Boden des Aufnahmebehältnisses 30 wieder (siehe den mit 1 bezeichneten Rahmen in der Fig. 10). Aus der erfassten Höhe kann insbesondere geschlossen werden, welche Tiefe das Aufnahmebehältnis 30 hat, da der Boden 34 desselben erfasst wird.

In Fig. 10 sind darüber hinaus zusätzliche Messkurven der Höhenprofile 302, 308, 310, 312, 314, 316 gezeigt. Diese jeweiligen Messkurven wurden durch Messung der Höhenprofile von einem (306) bis sechs (316) aufeinander gestapelten Objekten 1a erhalten (und übereinandergelegt), die in dem Aufnahmebehältnis gestapelt sind. In diesem Beispiel handelt es sich um die Messwerte des Höhenprofils des ersten Objekts 1a (siehe Fig. 1), das in das Aufnahmebehältnis 30 (analog Fig. 2b) eingebracht worden ist.

Sobald also ein erstes Objekt 1a eingebracht worden ist, wird ein im Vergleich zum Höhenprofil 301 höheres Höhenprofil 302 entlang der Querseite 13a des Objekts 1a gemessen, das ungefähr in der Mitte der Strecke eine Vertiefung 304 und eine Erhöhung 306 aufweist. Die Vertiefung 304 bzw. Erhöhung 306 werden durch Aussparungen und die Identifikationsflächen erzeugt, im diesem Fall etwa durch die Aussparung 26a und die Detektionsfläche 20a des ersten Objekts 1a. Nach Einbringen des zweiten, dritten, vierten, fünften und sechsten Objekts wird jeweils ein drittes, viertes, fünftes, sechstes und siebtes Höhenprofil 308, 310, 312, 314, 316 erfasst, das jeweils ungefähr in der Mitte der Strecke eine Vertiefung und eine Erhöhung aufweist. In der Fig. 10 kann beispielsweise die Stapelhöhe des ersten Objekts beispielsweise als Differenz zwischen dem zweiten und dritten oder dem dritten und vierten Höhenprofil erkannt werden (wiederum: kann, technisch nicht sinnvoll, etwas zu viel hinein interpretiert, hier sollte lediglich gezeigt werden, dass unterschiedliche Stapelhöhen auch unterschiedliche Höhenprofile ergeben, nach einer einmaligen Messung zählt das Gerät automatisch mit, geht wesentlich schneller als jedes Mal messen). Aus der Gesamthöhe kann die Anzahl der gestapelten Objekte ermittelt werden, entweder durch Vergleich mit in einer Datenbank hinterlegten Werten, oder durch Anwendung der Formel $h_T = (n - 1) \times h_{SO} + d$ (siehe oben). Sollte jedoch ein anderes Objekt, wie das zweite erfindungsgemäße Objekt in das Aufnahmebehältnis 30 eingebracht worden sein, so ändert sich das erfasste Höhenprofil. In diesem Fall können Vertiefungen und Erhöhungen in dem Erfassten Höhenprofil in dem Bereich des mit 3 bezeichneten Rahmens liegen, statt im Bereich des mit 2 bezeichneten Rahmens wie in dem vorliegendem Fall. Mit Hilfe dieser Information lässt sich das erfasste Objekt identifizieren.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen verwendet werden.

## Patentansprüche

1.   Apparat zur Aufreinigung bzw. Prozessierung und/oder Analyse von biologischen Zielmolekülen mit mindestens einer Aufnahmevorrichtung (1a, 1b, 1c, 1d, 1e, 1f, 1g) zur Aufnahme von Material für die Aufreinigung, Prozessierung, und/oder Analyse der biologischen Zielmoleküle,
wobei die Aufnahmevorrichtung mindestens ein Identifikationselement (20a, 22a, 26a, 20b, 21b, 22b, 23b, 24b, 25b, 26b, 20c, 21c, 22c, 23c, 20d, 20e, 20f, 21f, 20g, 21g) umfasst, wobei das mindestens eine Identifikationselement ein Höhenprofil (202, 203, 204, 205, 206, 207) zur Identifikation der Aufnahmevorrichtung definiert, wobei das Höhenprofil für mindestens eine Höhenmessung vorgesehen ist und sich zumindest abschnittsweise entlang einer Linie, vorzugsweise einer geraden Linie, erstreckt, und wobei das Höhenprofil mindestens zwei Identifikationsflächen von unterschiedlicher Höhe und/oder unterschiedlicher Länge (20a, 22a, 20b, 21b, 22b, 23b, 24b, 25b, 20c, 21c, 22c, 23c, 20d, 20e, 20f, 21f, 20g, 21g) zur Höhenmessung aufweist, und
wobei der Apparat eine Erfassungseinrichtung (106) umfasst zum Erfassen der mindestens einen Aufnahmevorrichtung, wobei die Erfassungseinrichtung jeweils eingerichtet ist, um mindestens einen Höhenwert des mindestens einen Identifikationselements zu erfassen und um aus dem mindestens einen Höhenwert eine Raumposition und/oder eine Ausrichtung und/oder eine Art und/oder die Anwesenheit und/oder die Anzahl und/oder den Zustand der mindestens einen Aufnahmevorrichtung zu ermitteln.

2.   Apparat nach Anspruch 1, wobei die Erfassungseinrichtung (106) ausgestattet ist, um eine Differenz zwischen dem erfassten mindestens einen Höhenwert der Aufnahmevorrichtung und einem Referenz-Höhenwert zu bilden, und aus der Differenz eine Anzahl von gestapelten Aufnahmevorrichtungen (1a, 1b) zu ermitteln.

3.   Apparat nach einem der vorherigen Ansprüche, wobei die Erfassungseinrichtung (106) ausgestattet ist, um aus dem mindestens einen erfassten Höhenwert einer Aufnahmevorrichtung eine Anwesenheit der Aufnahmevorrichtung zu ermitteln, vorzugsweise durch Triangulation.

**4.** Apparat nach einem der vorherigen Ansprüche, wobei die Erfassungseinrichtung (106) eingerichtet ist, um den mindestens einen Höhenwert der Aufnahmevorrichtung mit einer 1-Punkt Messung zu erfassen.

**5.** Apparat nach einem der vorherigen Ansprüche, wobei die Erfassungseinrichtung (106) ausgestattet ist, um mindestens zwei Höhenwerte, insbesondere ein Höhenprofil entlang einer Linie, des mindestens einen Identifikationselements der Aufnahmevorrichtung zu erfassen.

**6.** Apparat nach einem der vorherigen Ansprüche, wobei die Erfassungseinrichtung (106) relativ zu der Aufnahmevorrichtung beweglich angeordnet ist.

**7.** Apparat nach einem der vorherigen Ansprüche, wobei der Apparat ausgestattet ist, um mindestens zwei Höhenprofile der Aufnahmevorrichtung zu erfassen, wobei vorzugsweise mindestens zwei Höhenprofile vorzugsweise auf einander gegenüberliegenden Seiten (13a, 15a, 13b, 15b, 13c, 13d, 15d, 13e, 15e, 13f, 15f, 13g, 15g) der Aufnahmevorrichtung liegen, und wobei weiter bevorzugt der Apparat ausgestattet ist, die mindestens zwei Höhenprofile in zueinander entgegengesetzter Richtung (S) zu erfassen.

**8.** Apparat nach einem der vorherigen Ansprüche, wobei die Erfassungseinrichtung (106), die 3-dimensionale Abbildungen erzeugen kann, eine Strahlungsquelle zum Bestrahlen des mindestens einen Identifikationselements und/oder einen Sensor zum Messen einer Intensität von Strahlung, die von dem mindestens einen Identifikationselementkommt, umfasst, wobei die Strahlungsquelle und der Sensor in einem Winkel, vorzugsweise in einem ungefähr rechten Winkel, zu der Linie angeordnet sind.

**9.** Apparat nach einem der Ansprüche 1 bis 8, wobei der Apparat eine Transportvorrichtung (100) zum Transportieren der Aufnahmevorrichtung umfasst.

**10.** Apparat nach Anspruch 9, wobei die Erfassungseinrichtung (106) in der Nähe der Transportvorrichtung (100) zum Transportieren der mindestens einen Aufnahmevorrichtung angeordnet ist.

**11.** Apparat nach Anspruch 9 oder 10, wobei der mindestens eine Höhenwert des mindestens einen Identifikationselements einer durch die Transportvorrichtung (100) aufgenommenen Aufnahmevorrichtung, insbesondere einer zu einem Sensor (108) der Erfassungseinrichtung (106) proximalsten Aufnahmevorrichtung einer Vielzahl von durch die Transportvorrichtung aufgenommen, vorzugsweise gestapelten Aufnahmevorrichtungen, durch die Erfassungseinrichtung erfassbar ist.

**12.** Apparat nach einem der Ansprüche 8 bis 11, wobei der Sensor mindestens einen Ultraschallsensor und/oder mindestens einen Lasersensor aufweist.

**13.** Apparat nach einem der Ansprüche 8 bis 12, wobei die Strahlungsquelle einen Ultraschallemitter und/oder einen Laser aufweist.

**14.** Aufnahmevorrichtung (1a, 1b, 1c, 1d, 1e, 1f, 1g) zur Aufnahme von Material für die Prozessierung, Aufreinigung und/oder Analyse von biologischen Zielmolekülen, mit mindestens einem Identifikationselement (20a, 22a, 26a, 20b, 21b, 22b, 23b, 24b, 25b, 26b, 20c, 21c, 22c, 23c, 20d, 20e, 20f, 21f, 20g, 21g), wobei das mindestens eine Identifikationselement ein Höhenprofil (202, 203, 204, 205, 206, 207) zur Identifikation der Aufnahmevorrichtung definiert, wobei das Höhenprofil für mindestens eine Höhenmessung vorgesehen ist und sich zumindest abschnittsweise entlang einer Linie, vorzugsweise einer geraden Linie, erstreckt, und wobei das Höhenprofil mindestens zwei Identifikationsflächen von unterschiedlicher Höhe und/oder unterschiedlicher Länge (20a, 22a, 20b, 21b, 22b, 23b, 24b, 25b, 20c, 21c, 22c, 23c, 20d, 20e, 20f, 21f, 20g, 21g) zur Höhenmessung aufweist.

**15.** Aufnahmevorrichtung nach Anspruch 14, wobei die Aufnahmevorrichtung eine Außenkontur (13a, 15a, 13b, 15b, 13c, 15d, 13e, 15e, 13f, 15f, 13g, 15g) aufweist, und sich das Höhenprofil entlang der Außenkontur erstreckt.

**16.** Aufnahmevorrichtung nach Anspruch 14, wobei die mindestens zwei Identifikationsflächen (20a, 22a; 20b, 21b, 22b, 23b, 24b, 25b; 20c, 22c; 21c, 23c; 20f, 21f; 20g, 21g) aneinander angrenzen und/oder beabstandet voneinander entlang des Höhenprofils, besonders bevorzugt entlang der Linie, angeordnet sind.

**17.** Aufnahmevorrichtung nach Anspruch 14 oder 16, wobei mindestens eine der mindestens zwei Identifikationsflächen insbesondere eine Länge entlang der Linie von ungefähr 1 mm bis ungefähr 10 mm, vorzugsweise ungefähr 2 bis 8 mm, weiter bevorzugt ungefähr 3 bis 6 mm aufweist.

**18.** Aufnahmevorrichtung nach einem der Ansprüche 14 oder 16 bis 17, wobei das Höhenprofil mindestens zwei Identifikationsflächen (20b, 21b; 20g, 21g) aufweist, die jeweils eine unterschiedliche Länge entlang der Linie aufweisen.

**19.** Aufnahmevorrichtung nach einem der Ansprüche 14 oder 18, wobei mindestens eine der mindestens zwei Identifikationsflächen quer zur Linie eine Breite von ungefähr 1mm bis ungefähr 10mm vorzugsweise ungefähr 2 bis 8 mm, weiter bevorzugt ungefähr 3 bis 5 mm aufweist.

**20.** Aufnahmevorrichtung nach einem der Ansprüche 14 oder 16 bis 19, wobei mindestens eine, vorzugsweise jede, der mindestens einen Identifikationsfläche viereckig, vorzugsweise rechteckig ist.

**21.** Aufnahmevorrichtung nach einem der Ansprüche 14 oder 16 bis 20, wobei das Höhenprofil mindestens eine Erfassungskante aufweist, die jeweils an eine Identifikationsfläche (28c, 28d, 28e, 28f, 28g) angrenzt, und die vorzugsweise zwischen der Identifikationsfläche und jeweils einer zur Identifikationsfläche orthogonalen Verbindungsfläche gebildet wird.

**22.** Aufnahmevorrichtung nach Anspruch 21, wobei die Kante im Wesentlichen orthogonal zur Längserstreckung entlang der Linie, entlang der das Höhenprofil erfasst wird, angeordnet ist.

**23.** Aufnahmevorrichtung nach einem der Ansprüche 21 oder 22, wobei zwei Identifikationsflächen an vorzugsweise gegenüberliegende Seiten einer Verbindungsfläche angrenzen, wobei die beiden an die Verbindungsflächeangrenzenden Identifikationsflächen jeweils unterschiedliche Höhen und optional unterschiedliche Längen und/oder Breiten aufweisen, wobei insbesondere die Verbindungsfläche entlang der Linie zwischen den beiden Identifikationsflächen angeordnet ist.

**24.** Aufnahmevorrichtung nach einem der Ansprüche 14 bis 23, wobei das Höhenprofil im Wesentlichen symmetrisch, vorzugsweise spiegelsymmetrisch oder punktsymmetrisch, bezüglich einer Spiegelebene orthogonal zu der Linie ist, die sich insbesondere entlang der Außenkontur der Aufnahmevorrichtung erstreckt.

**25.** Aufnahmevorrichtung nach einem der Ansprüche 14 bis 23, wobei das Höhenprofil nicht symmetrisch, vorzugsweise nicht spiegelsymmetrisch oder nicht punktsymmetrisch, gestaltet ist.

**26.** Aufnahmevorrichtung nach Anspruch 24, wobei die Identifikationsflächen (20f, 21f; 20g, 21g) auf beiden Seiten einer Ebene, die im Wesentlichen orthogonal zu der Linie ist, entlang der das Höhenprofil erfasst wird, eine unterschiedliche Breite aufweisen.

**27.** Aufnahmevorrichtung nach Anspruch 25, wobei die Identifikationsflächen (20f, 21f; 20g, 21g) auf beiden Seiten einer Ebene, die im Wesentlichen orthogonal zu der Linie, entlang der das Höhenprofil erfasst wird, ist, eine unterschiedliche Länge und/oder Höhe und optional zusätzlich eine unterschiedliche Breite aufweisen.

**28.** Aufnahmevorrichtung nach einem der Ansprüche 14 bis 27, wobei die Aufnahmevorrichtung eine Außenkontur mit mindestens zwei sich gegenüberliegenden Seiten (13a, 15a, 13b, 15b, 13c, 13d, 15d, 13e, 15e, 13f, 15f, 13g, 15g) aufweist, wobei die sich gegenüberliegenden Seiten jeweils ein erstes bzw. zweites Identifikationselement umfassen, die vorzugsweise zueinander axialsymmetrisch um eine Mittelachse der Aufnahmevorrichtung gestaltet sind.

**29.** Aufnahmevorrichtung nach einem der Ansprüche 14 bis 28, wobei die Aufnahmevorrichtung eine obere Seite aufweist, von der das aufzunehmende Material aus der Aufnahmevorrichtung parallel zu einer Mittelachse (M) entnommen bzw. in die Aufnahmevorrichtung abgegeben wird, wobei das Höhenprofil derart angeordnet ist, dass eine Höhenmessung des Höhenprofils von oben durchführbar ist.

**30.** Aufnahmevorrichtung nach Anspruch 29, wobei mindestens eine der Identifikationsflächen, vorzugsweise alle Identifikationsflächen, orthogonal zur Mittelachse (M) angeordnet ist bzw. sind.

**31.** Aufnahmevorrichtung nach einem der Ansprüche 14 bis 30, wobei mindestens eine der Identifikationsflächen (20b, 20d, 20e, 20f) im Wesentlichen die gleiche Höhe wie eine obere Kante der Aufnahmevorrichtung aufweisen.

**32.** Aufnahmevorrichtung nach einem der Ansprüche 14 bis 31, wobei das von der Aufnahmevorrichtung aufzunehmende Material aus der Gruppe umfassend Verbrauchsmaterial, wie etwa ein Prozessgefäß oder eine Einweg-Pipiettenspitze; ein vor direkter Berührung zu schützendes Geräteteil ,wie etwa ein Magnet zur Probeneinwirkung; ein für die Prozessierung, Aufreinigung und/oder Analyse der biologischen Zielmoleküle verwendete Material wie etwa eine Probenflüssigkeit mit den Zielmolekülen, eine Lyse-, Binde-, Puffer-, Wasch-, Elutions-Mischungen oder sonstige Prozessmischungen ausgewählt ist.

**33.** Aufnahmevorrichtung nach einem der Ansprüche 14 bis 32 mit mindestens einem an einem Ende geschlossenen Aufhahmebehältnis (3a, 3b, 3d, 3e, 3f, 3g) zur Aufnahme des Materials.

**34.** Aufnahmevorrichtung nach Anspruch 33, wobei das mindestens eine Aufhahmebehältnis ein Volumen von 8 µl bis 7000µl, vorzugsweise von 10 µl bis 5000 µl, am meisten bevorzugt von 15 µl bis 3000 µl pro

Aufnahmebehältnis aufweist.

35. Aufnahmevorrichtung nach einem der Ansprüche 33 oder 34 mit einer Mehrzahl von Aufnahmebehältnissen, vorzugsweise 8 Aufnahmebehältnissen, wobei die Aufnahmebehältnisse vorzugsweise in einer Matrix-Anordnung angeordnet sind.

36. Aufnahmevorrichtung nach einem der Ansprüche 14 bis 32, aufweisend mindestens einen an zwei vorzugsweise gegenüberliegenden Seiten geöffneten Aufnahmebereich zur Aufnahme des Materials.

37. Aufnahmevorrichtung nach einem der Ansprüche 14 bis 36 mit mindestens einem Durchlass (5a, 5b), vorzugsweise mindestens zwei Durchlässen, zum Durchführen eines Hebeelementes einer Transportvorrichtung (100), wobei der oder die Durchlässe sich vorzugsweise parallel zur Mittelachse (M) erstrecken.

38. Aufnahmevorrichtung nach einem der Ansprüche 14 bis 37, wobei die Aufnahmevorrichtung (1a, 1b) für einen Eingriff zweier übereinander angeordneter Aufnahmevorrichtungen geformt ist, so dass zwei oder mehr der Aufnahmevorrichtungen in vorbestimmten Ausrichtungen zueinander stapelbar sind, vorzugsweise so, dass gestapelte Aufnahmevorrichtungen gemeinsam eine Gesamthöhe aufweisen, die geringer als die Summe der Einzelhöhen der Aufnahmevorrichtungen ist, wobei die Aufnahmevorrichtungen vorzugsweise derart stapelbar sind, dass jeweilige Durchlässe mehrerer gestapelter Aufnahmevorrichtungen entlang einer Linie zueinander ausrichtbar sind.

39. Aufnahmevorrichtung nach Anspruch 38, wobei die Aufnahmevorrichtung eine Stapelhöhe weniger als 80% der Gesamthöhe der Aufnahmevorrichtung aufweist, wobei die Stapelhöhe vorzugsweise weniger als ungefähr 50 mm und/oder mehr als ungefähr 5 mm, weiter bevorzugt 10 bis 40 mm und am meisten bevorzugt 15 bis 30 mm beträgt.

40. Apparat nach einem der Ansprüche 1 bis 13, wobei die mindestens eine Aufnahmevorrichtung nach einem der Ansprüche 15 bis 39 ausgestaltet ist.

41. Verfahren zum Inventarisieren, zur Lagebestimmung und/oder zur Ausrichtungsbestimmung von Aufnahmevorrichtungen gemäß einem der Ansprüche 14 bis 39, die zum automatisierten Prozessieren eines Materials, das biologische Zielmoleküle enthält, auf einem entsprechenden Apparat benötigt werden, bei dem mindestens ein Höhenwert eines Detektionsbereichs der jeweiligen Aufnahmevorrichtung erfasst wird; und aus dem Höhenwert eine Raumposition und/oder eine Ausrichtung und/oder eine Art und/oder die Anwesenheit und/oder die Anzahl und/oder ein Zustand der jeweiligen Aufnahmevorrichtung auf dem Apparat ermittelt wird.

42. Verfahren nach Anspruch 41, wobei zur Bestimmung der Raumposition und/oder der Art und/oder der Anwesenheit und/oder der Anzahl und/oder des Zustandes der Aufnahmevorrichtung eine 1-Punkt Messung zum Erfassen des Höhenwerts durchgeführt wird, der dabei erhaltene Wert mit entsprechend vorher festgelegten Daten verglichen wird, das Ergebnis des Vergleichs zur Steuerung des Prozessverlaufs auf dem Apparat verwendet wird, und vorzugsweise optional ein Hinweis abgegeben wird, wenn das bei der Messung des Höhenwertes erhaltene Ergebnis nicht mit den vorher festgelegten Daten übereinstimmt.

43. Verfahren nach Anspruch 42, wobei mindestens zwei Höhenwerte, insbesondere ein Höhenprofil, des Detektionsbereichs erfasst werden, die dabei erhaltenen Höhenwerte, insbesondere das Höhenprofil, mit entsprechend vorher festgelegten Daten verglichen werden, das Ergebnis des Vergleichs zur Steuerung des Prozessverlaufs auf dem Apparat verwendet wird, und vorzugsweise ein Hinweis abgegeben wird, wenn das bei der Messung der Höhenwerte erhaltene Ergebnis, insbesondere das erhaltene Höhenprofil, nicht mit den vorher festgelegten Daten übereinstimmt.

44. Verfahren nach Anspruch 43, wobei zumindest vor dem Erfassen des ersten Höhenprofils mindestens ein Justage-Höhenprofil entlang mindestens einer Justage-Linie erfasst wird.

45. Verfahren nach Anspruch 44, wobei das Justage-Höhenprofil mindestens einer Justage-Linie, die sich an einer Stelle innerhalb des Gerätes befindet, an dem keine Aufnahmevorrichtungen detektiert werden sollen, erfasst wird und wobei das erfasste Justage-Höhenprofil für die nachfolgenden Höhenmessungen als Basis verwendet wird.

46. Verfahren nach Anspruch 44, wobei mindestens ein Höhenprofil entlang mindestens einer Justage-Linie, die innerhalb des Gerätes senkrecht zu einer ersten Kante mit definierter Soll-Position verläuft, erfasst wird, mindestens ein Höhenprofil entlang mindestens einer Justage-Linie, die innerhalb des Gerätes senkrecht zu einer zweiten Kante mit definierter Soll-Position verläuft, erfasst wird, wobei die erste Kante rechtwinklig zur zweiten Kante angeordnet ist, aus den erhaltenen Höhenlinien der vorherigen Messungen die tatsächlichen Positionen der definierten Kanten bestimmt werden, die tatsächlichen Positionen der Kanten mit deren Soll-Positionen verglichen werden, und die Information aus dem Vergleich zwischen den Ist-Positionen und den Soll-Positionen der definierten Kanten zur Steuerung des weiteren Prozessverlaufs auf dem Apparat verwendet wird.

47. Verfahren nach Anspruch 46, wobei die erste und/oder zweite Kanten durch Ränder einer viereckigen, vorzugsweise rechteckige Aussparung oder Ausprägung gebildet wird bzw. werden.

48. Verfahren nach Anspruch 46 oder 47, wobei, wenn die Diskrepanz zwischen den Ist-Positionen und den Soll-Positionen der definierten Kanten einen vorher bestimmten Wert nicht überschreitet, die Ist-Positionen im Prozessverlauf auf dem Apparat zur Definition der Position anderer Bauteile oder Verbrauchsmaterialien des Apparates verwendet wird.

49. Verfahren nach einem der Ansprüche 46 bis 48, wobei bei Überschreiten eines vorher bestimmten Werts der Diskrepanz zwischen den Ist-Positionen und den Soll-Positionen der definierten Kanten eine Fehlermeldung angezeigt wird.

50. Verfahren nach einem der Ansprüche 41 bis 49, wobei mindestens ein jeweiliges Höhenprofil mehrfach entlang zueinander paralleler Linien erfasst wird, wobei die Linien vorzugsweise jeweils lateral zueinander versetzt sind.

51. Verfahren nach einem der Ansprüche 42 bis 50, wobei aus einer Höhendifferenz zwischen dem mindesten einen erfassten Höhenwert des Detektionsbereichs der Aufnahmevorrichtung und einer Referenzhöhe eine Anzahl von gestapelten Aufnahmevorrichtungen ermittelt wird.

52. Verfahren nach einem der Ansprüche 42 bis 51, wobei die Art und die Anzahl der gestapelten Aufnahmevorrichtungen mit der folgenden Formel ermittelt werden:

$$h_T = (n - 1) \times h_{SO} + d,$$

wobei $h_T$ die Höhendifferenz zwischen dem mindestens einen erfassten Höhenwert des Detektionsbereichs mit dem Höhenprofil einer Aufnahmevorrichtung und einer Referenzhöhe, n die Anzahl der gestapelten Aufnahmevorrichtungen, $h_{SO}$ die Stapelhöhe zwischen zwei benachbarten, gestapelten Aufnahmevorrichtungen und d eine Identifikationshöhe zur Identifizierung der Aufnahmevorrichtung ist.

53. Verfahren nach einem der Ansprüche 42 bis 52, wobei mindestens eine Aufnahmevorrichtung durch eine Transportvorrichtung aufgenommen wird und der mindestens eine Höhenwert des Detektionsbereichs von der aufgenommenen Aufnahmevorrichtung erfasst wird.

54. Verfahren nach Anspruch 53, wobei eine Anzahl und/oder Art von gestapelten Aufnahmevorrichtungen ermittelt wird, während diese von der Transportvorrichtung aufgenommen sind, und wobei vorzugsweise ein oder mehrere der aufgenommenen und erfassten Aufnahmevorrichtungen von der Transportvorrichtung abgesetzt werden.

**Claims**

1. Apparatus for the purification, processing and/or analysis of biological target molecules with at least one accommodation device (1a, 1b, 1c, 1d, 1e, 1f, 1g) for accommodating material for purification, processing and/or analysis of the biological target molecules,
wherein the accommodation device comprises at least one identification element (20a, 22a, 26a, 20b, 21b, 22b, 23b, 24b, 25b, 26b, 20c, 21c, 22c, 23c, 20d, 20e, 20f, 21f, 20g, 21g), wherein the at least one identification element defines a height profile (202, 203, 204, 205, 206, 207) for identifying the accommodation device, wherein the height profile is provided for at least one height measurement and extends along at least a section of a line, preferably a straight line, and wherein the height profile has at least two identification surfaces of different height and/or length (20a, 22a, 20b, 21b, 22b, 23b, 24b, 25b, 20c, 21c, 22c, 23c, 20d, 20e, 20f, 21f, 20g, 21g) for the height measurement, and wherein the apparatus comprises a detection device (106) for detecting the at least one accommodation device, wherein each detection device is configured to detect at least one height value of the at least one identification element and to calculate a spatial position and/or an orientation and/or a type and/or the presence and/or the number and/or the state of the at least one accommodation device from the at least one height value.

2. Apparatus according to claim 1, wherein the detection device (106) is equipped to generate a difference between the at least one detected height value of the accommodation device and a nominal height value, and to calculate a number of stacked accommodation devices (1a, 1b) from the difference.

3. Apparatus according to either of the preceding claims, wherein the detection device (106) is equipped to calculate a presence of an accommodation device from the at least one detected height value of the accommodation device, preferably by triangulation.

4. Apparatus according to any one of the preceding claims, wherein the detection device (106) is designed to detect the at least one height value of the accommodation device with a one-point measurement.

5. Apparatus according to any one of the preceding claims, wherein the detection device (106) is equipped to detect at leat two height values, in particular a height profile along a line, of the at least one identification element of the accommodation device.

6. Apparatus according to any one of the preceding claims, wherein the detection device (106) is disposed so as to be movable relative to the accommodation device.

7. Apparatus according to any one of the preceding claims, wherein the apparatus is equipped to detect at least two height profiles of the accommodation device, wherein preferably at least two height profiles are located on opposite sides (13a, 15a, 13b, 15b, 13c, 13d, 15d, 13e, 15e, 13f, 15f, 13g, 15g) of the accommodation device, and wherein the apparatus is further preferably equipped to detect the at least two height profiles in opposite directions (S) relative to each other.

8. Apparatus according to any one of the preceding claims, wherein the detection device (106), which is able to generate 3-dimensional images, comprises a radiation source for irradiating the at least one identification element and/or a sensor for measuring the intensity of radiation emanating from the at least one identification element, wherein the radiation source and the sensor are arranged at an angle, preferably approximately at right angles, to the line.

9. Apparatus according to any one of claims 1 to 8, wherein the apparatus comprises a transport device (100) for transporting the accommodation device.

10. Apparatus according to claim 9, wherein the detection device (106) is arranged close to the transport device (100) for transporting the at least one accommodation device.

11. Apparatus according to claim 9 or 10, wherein the at least one height value of the at least one identification element of an accommodation device picked up by the transport device (100), particularly an accommodation device closest to a sensor (108) of the detection device (106) among a multiplicity of preferably stacked accommodation devices picked up by the transport device, is detectable by the detection device.

12. Apparatus according to any one of claims 8 to 11, wherein the the sensor includes at least one ultrasonic sensor and/or at least one laser sensor.

13. Apparatus according to any one of claims 8 to 12, wherein the radiation source includes an ultrasonic emitter and/or a laser.

14. Accommodation device (1a, 1b, 1c, 1d, 1e, 1f, 1g) for accommodating material for processing, purification and/or analysis of biological target molecules, with at least one identification element (20a, 22a, 26a, 20b, 21b, 22b, 23b, 24b, 25b, 26b, 20c, 21c, 22c, 23c, 20d, 20e, 20f, 21f, 20g, 21g), wherein the at least one identification element defines a height profile (202, 203, 204, 205, 206, 207) for identifying the accommodation device, wherein the height profile is provided for at least one height measurement and extends along at least a section of a line, preferably a straight line, and wherein the height profile has at least two identification surfaces of different height and/or length (20a, 22a, 20b, 21b, 22b, 23b, 24b, 25b, 20c, 21c, 22c, 23c, 20d, 20e, 20f, 21f, 20g, 21g) for the height measurement.

15. Accommodation device according to claim 14, wherein the accommodation device has an outer contour (13a, 15a, 13b, 15b, 13c, 13d, 15d, 13e, 15e, 13f, 15f, 13g, 15g) and the height profile extends along the outer contour.

16. Accommodation device according to claim 14, wherein the at least two identification surfaces (20a, 22a; 20b, 21b, 22b, 23b, 24b, 25b; 20c, 22c; 21c, 23c; 20f, 21f; 20g, 21g) are arranged adjacent to each other and/or spaced apart from each other along the height profile, particularly preferably along the line.

17. Accommodation device according to claim 14 or 16, wherein at least one of the at least two identification surfaces in particular has a length of approximately 1 mm to approximately 10 mm, preferably approximately 2 to 8 mm more preferably approximately 3 to 6 mm along the line.

18. Accommodation device according to any one of claims 14 or 16 to 17, wherein the height profile has at least two identification surfaces (20b, 21b; 20g, 21g), each of which has a different length along the line.

19. Accommodation device according to either of claims 14 or 18, wherein at least one of the at least two identification surfaces has a width of approximately 1 mm to approximately 10 mm, preferably approximately 2 to 8 mm more preferably approximately 3 to 5 mm perpendicularly to the line.

**20.** Accommodation device according to any one of claims 14 or 16 to 19, wherein at least one, preferably each of the at least one identification surfaces is quadrangular, preferably rectangular.

**21.** Accommodation device according to any one of claims 14 or 16 to 20, wherein the height profile includes at least one detection edge, each of which is adjacent to an identification surface (28c, 28d, 28e, 28f, 28g), and which is preferably formed between the identification surface and a connecting surface orthogonal to the respective identification surface.

**22.** Accommodation device according to claim 21, wherein the edge is arranged substantially orthogonally to the longitudinal extension along the line, along which the height profile is detected.

**23.** Accommodation device according to either of claims 21 or 22, wherein two identification surfaces are adjacent to preferably opposing sides of a connecting surface, wherein the two identification surfaces adjacent to the respective connecting have different heights and optionally different lengths and/or widths, wherein in particular the connecting surface is arranged along the line between the two identification surfaces.

**24.** Accommodation device according to any one of claims 14 to 23, wherein the height profile is substantially symmetrical, preferably mirror symmetrical or symmetrical about a point with respect to a mirror plane orthogonal to the line which in particular extends along the outer contour of the accommodation device.

**25.** Accommodation device according to any one of claims 14 to 23, wherein the height profile is not configured symmetrically, preferably not mirror symmetrically or not symmetrically about a point.

**26.** Accommodation device according to claim 24, wherein the identification surfaces (20f, 21f; 20g, 21g) on both sides of a plane which is substantially orthogonal to the line along which the height profile is detected have different widths.

**27.** Accommodation device according to claim 25, wherein the identification surfaces (20f, 21f; 20g, 21g) on both sides of a plane which is substantially orthogonal to the line along which the height profile is detected have different lengths and/or heights, and optionally also have different widths.

**28.** Accommodation device according to any one of claims 14 to 27, wherein the accommodation device has an outer contour with at least two opposing sides (13a, 15a, 13b, 15b, 13c, 13d, 15d, 13e, 15e, 13f, 15f, 13g, 15g), wherein the opposing sides each comprise a first or second identification element, which are preferably constructed axially symmetrically to each other about a middle axis of the accommodation device.

**29.** Accommodation device according to any one of claims 14 to 28, wherein the accommodation device has an upper side, by which the material to be accommodated is removed from the accommodation device parallel to a middle axis (M) and deposited in the accommodation device, wherein the height profile is arranged such that a height measurement of the height profile can be carried out from above.

**30.** Accommodation device according to claim 30, wherein at least one of the identification surfaces, preferably all of the identification surfaces, is/are arranged orthogonally to the middle axis (M).

**31.** Accommodation device according to any one of claims 14 to 30, wherein at least one of the identification surfaces (20b, 20d, 20e, 20f) has substantially the same height as an upper edge of the accommodation device.

**32.** Accommodation device according to any one of claims 14 to 31, wherein the material to be accommodated by the accommodation device is selected from the group consisting of consumables, such as a process vessel or disposable pipette tip; an appliance element for preventing direct contact, such as a magnet for sample exposure, a material used for processing, purifying and/or analysing the biological target molecules, such as sample liquid containing the target molecules, a lysis mixture, binding mixture, buffer mixture, washing mixture, elution mixture and other process mixtures.

**33.** Accommodation device according to any one of claims 14 to 32, having an accommodation receptacle (3a, 3b, 3d, 3e, 3f, 3g), of which one end is closed, for accommodating the material.

**34.** Accommodation device according to claim 33, wherein the at least one accommodation receptacle has a volume from 8 $\mu$l to 7000 $\mu$l, preferably from 10 $\mu$l to 5000 $\mu$l, most preferably from 15 $\mu$l to 3000 $\mu$l for each accommodation receptacle.

**35.** Accommodation device according to either of claims 33 or 34, having a plurality of accommodation receptacles, preferably 8 accommodation receptacles, wherein the accommodation receptacles are preferably arranged in a matrix pattern.

**36.** Accommodation device according to any one of claims 14 to 32, having at least one accommodation zone open on two preferably opposite sides for accommodating the material.

37. Accommodation device according to any one of claims 14 to 36, having at least one passthrough (5a, 5b), preferably at least two passthroughs, to allow a lifting element of a transport device (100) to pass through, wherein the one or more passthrough(s) preferably extend(s) parallel to the middle axis (M).

38. Accommodation device according to any one of claims 14 to 37, wherein the accommodation device (1a, 1b) is shaped to enable engagement of two accommodation devices arranged one on top of the other, such that two or more of the accommodation devices are stackable in predetermined orientations relative to each other, preferably in such manner that stacked accommodation devices have a total height that is smaller than the sum of the individual heights of the accommodation devices, wherein the accommodation devices are preferably stackable in such manner that the respective passthroughs of multiple stacked accommodation devices can be aligned along a line with respect to each other.

39. Accommodation device according to claim 38, wherein the accommodation device has a stack height less than 80% of the total height of the accommodation device, wherein the stack height is preferably less than about 50 mm and/or more than about 5 mm, more preferably 10 to 40 mm and most preferably 15 to 30 mm.

40. Apparatus according to any one of claims 1 to 13, wherein the at least one accommodation device is designed according to any one of claims 15 to 39.

41. Method for inventorying, determining position and/or orientation of accommodation devices according to any one of claims 14 to 39 which are needed for the automated processing of a material containing biological target molecules on a corresponding apparatus, in which at least one height value of a detection area of the respective accommodation device is detected; and a spatial position and/or an orientation and/or a type and/or the presence and/or the number and/or a state of the respective accommodation device on the apparatus is calculated from the height value.

42. Method according to claim 41, wherein a 1-point measurement for detecting the height value is carried out to determine the spatial position and/or the type and/or the presence and/or the number and/or the state of the accommodation device, the value obtained thereby is compared with data determined correspondingly previously, the result of the comparison is used to control the course of the process on the apparatus, and optionally a notification is preferably output if the result obtained by the measurement of the height value does not match the previously determined data.

43. Method according to claim 42, wherein at least two height values, particularly a height profile of the detection area, are detected, the height values obtained thereby, particularly the height profile, are compared with compared with data determined correspondingly previously, the result of the comparison is used for controlling the course of the process on the apparatus, and a notification is preferably output if the result obtained by the measurement of the height values, particularly the height profile, does not match the previously determined data.

44. Method according to claim 43, wherein at least one calibration height profile is detected along at least one calibration line least before the detection of the first height profile.

45. Method according to claim 44, wherein the calibration height profile of at least one calibration line is detected at a position inside the device where no accommodation devices are to be detected, and wherein the calibration height profile determined is used as the basis for the subsequent height measurements.

46. Method according to claim 44, wherein at least one height profile is detected along at least one calibration line extending inside the device perpendicularly to a first edge with defined nominal position, at least one height profile is detected along at least one calibration line extending inside the device perpendicularly to a second edge with defined nominal position, wherein the first edge is arranged at right angles to the second edge, the actual positions of the defined edges are dtermined from the height lines obtained with the previous measurements, the actual positions of the edges are compared with the nominal positions thereof, and the information from the comparison between the actual positions and the nominal positions of the defined edges is used to control the subsequent course of the process on the apparatus.

47. Method according to claim 46, wherein the first and/or second edge(s) is/are formed by borders of a quadrangular, preferably rectangular recess or protrusion.

48. Method according to claim 46 or 47, wherein if the discrepancy between the actual positions and the nominal positions of the defined edges does not exceed a previously determined value, the actual positions are used in the course of the process on the apparatus to define the position of other components or consumables of the apparatus.

**49.** Method according to any one of claims 46 to 48, wherein if the discrepancy between the actual positions and the nominal positions of the defined edges does exceed a previously determined value, an error message is displayed.

**50.** Method according to any one of claims 41 to 49, wherein at least one respective height profile is detected several times along lines parallel to each other, wherein the lines are laterally offset with respect to each other.

**51.** Method according to any one of claims 42 to 50, wherein a number of stacked accommodation devices is calculated on the basis of a height difference between the at least one detected height value of the detection area of the accommodation device and a reference height.

**52.** Method according to any one of claims 42 to 51, wherein the type and number of the stacked accommodation devices are calculated using the following formula:

$$h_T = (n-1) \times h_{so} + d,$$

wherein $h_T$ is the difference in height between the at least one detected height value of the detection area with the height profile of an accommodation device and a reference height, n is the number of stacked accommodation devices, $h_{so}$ is the stack height between to adjacent stacked accommodation devices, and d is an identification height for identifying the accommodation device.

**53.** Method according to any one of claims 42 to 52, wherein at least one accommodation device is picked up by a transport device and the at least one height value of the detection area on the picked up accommodation device is detected.

**54.** Method according to claim 53, wherein a number and/or type of stacked accommodation devices is calculated while said accommodation devices are picked up by the transport device, and wherein preferably one or more of the accommodation device(s) picked up and detected are deposited by the transport device.

**Revendications**

**1.** Appareil destiné à purifier ou à traiter et/ou à analyser des molécules biologiques cibles, avec au moins un dispositif réceptacle (1a, 1b, 1c, 1d, 1e, 1f, 1g) destiné à recevoir du matériel pour la purification, le traitement et/ou l'analyse de molécules biologiques cibles,

le dispositif réceptacle comprenant au moins un élément d'identification (20a, 22a, 26a, 20b, 21b, 22b, 23b, 24b, 25b, 26b, 20c, 21c, 22c, 23c, 20d, 20e, 20f, 21f, 20g, 21g), l'au moins un élément d'identification définissant un profil en hauteur (202, 203, 204, 205, 206, 207) pour l'identification du dispositif réceptacle, le profil en hauteur étant prévu pour au moins une mesure de la hauteur et s'étendant au moins en partie le long d'une ligne, de préférence d'une ligne droite et le profil en hauteur comportant au moins deux surfaces d'identification de hauteur différente et/ou de longueur différente (20a, 22a, 20b, 21b, 22b, 23b, 24b, 25b, 20c, 21c, 22c, 23c, 20d, 20e, 20f, 21f, 20g, 21g) pour la mesure de la hauteur et

l'appareil comprenant un système de détection (106) pour détecter l'au moins un dispositif réceptacle, le système de détection étant chaque fois aménagé pour détecter au moins une valeur de hauteur de l'au moins un élément d'identification et pour déterminer à partir d'au moins une valeur de hauteur une position dans l'espace et/ou une orientation et/ou un type et/ou la présence et/ou le nombre et/ou l'état de l'au moins un dispositif réceptacle.

**2.** Appareil selon la revendication 1, le système de détection (106) étant équipé pour créer une différence entre l'au moins une valeur de hauteur détectée du dispositif réceptacle et une valeur de hauteur de référence et à partir de la différence, pour déterminer un nombre de dispositifs réceptacles (1a, 1b) empilés.

**3.** Appareil selon l'une quelconque des revendications précédentes, le système de détection (106) étant équipé pour déterminer à partir de l'au moins une valeur de hauteur d'un dispositif réceptacle une présence du dispositif réceptacle, de préférence par triangulation.

**4.** Appareil selon l'une quelconque des revendications précédentes, le système de détection (106) étant aménagé pour détecter l'au moins une valeur de hauteur du dispositif réceptacle par une mesure à 1 point.

**5.** Appareil selon l'une quelconque des revendications précédentes, le système de détection (106) étant équipé pour détecter au moins deux valeurs de hauteur, notamment un profil en hauteur le long d'une ligne de l'au moins un élément d'identification du dispositif réceptacle.

**6.** Appareil selon l'une quelconque des revendications précédentes,
le système de détection (106) étant placé en étant mobile par rapport au dispositif réceptacle.

**7.** Appareil selon l'une quelconque des revendications précédentes,
l'appareil étant équipé pour détecter au moins deux profils en hauteur du dispositif réceptacle, de préférence au moins deux profils en hauteur se situant de préférence sur des côtés (13a, 15a, 13b, 15b, 13c, 13d, 15d, 13e, 15e, 13f, 15f, 13g, 15g) opposés du dispositif réceptacle et de manière préférentielle par ailleurs, l'appareil étant équipé pour détecter les au moins deux profils en hauteur dans des directions (S) mutuellement opposées.

**8.** Appareil selon l'une quelconque des revendications précédentes, le système de détection (106), susceptible de créer des reproductions tridimensionnelles comprenant une unité de rayonnement, destinée à irradier l'au moins un élément d'identification et/ou un capteur destiné à mesurer une intensité de rayonnement provenant d'au moins un élément d'identification, la source de rayonnement et le capteur étant placés sous un angle, de préférence sous un angle approximativement droit par rapport à la ligne.

**9.** Appareil selon l'une quelconque des revendications 1 à 8,
l'appareil comprenant un dispositif de transport (100) pour transporter le dispositif réceptacle.

**10.** Appareil selon la revendication 9,
le système de détection (106) étant placé à proximité du dispositif de transport (100) pour transporter l'au moins un dispositif réceptacle.

**11.** Appareil selon la revendication 9 ou 10,
l'au moins une valeur de hauteur de l'au moins un élément d'identification d'un dispositif réceptacle réceptionné par le dispositif de transport (100) notamment d'un dispositif réceptacle le plus près en direction proximale d'un capteur (108) du système de détection (106) parmi une pluralités de dispositifs réceptacles réceptionnés par le dispositif de transport, de préférence empilés étant détectable par le système de détection.

**12.** Appareil selon l'une quelconque des revendications 8 à 11, le capteur comportant au moins un capteur à ultrasons et/ou au moins un capteur au laser.

**13.** Appareil selon l'une quelconque des revendications 8 à 12, la source de rayonnement comportant un émetteur d'ultrasons et/ou un laser.

**14.** Dispositif réceptacle (1a, 1b, 1c, 1d, 1e, 1f, 1g) destiné à recevoir du matériel pour le traitement, la purification et/ou l'analyse de molécules biologiques cibles, avec au moins un élément d'identification (20a, 22a, 26a, 20b, 21b, 22b, 23b, 24b, 25b, 26b, 20c, 21c, 22c, 23c, 20d, 20e, 20f, 21f, 20g, 21g), l'au moins un élément d'identification définissant un profil en hauteur (202, 203, 204, 205, 206, 207) pour l'identification du dispositif réceptacle, le profil en hauteur étant prévu pour au moins une mesure de hauteur et s'étendant au moins au moins en partie le long d'une ligne, de préférence d'une ligne droite et le profil en hauteur comportant au moins deux surfaces d'identification de hauteur différente et/ou de longueur différente (20a, 22a, 20b, 21b, 22b, 23b, 24b, 25b, 20c, 21c, 22c, 23c, 20d, 20e, 20f, 21f, 20g, 21g) pour la mesure de la hauteur.

**15.** Dispositif réceptacle selon la revendication 14, le dispositif réceptacle présentant un contour extérieur (13a, 15a, 13b, 15b, 13c, 13d, 15d, 13e, 15e, 13f, 15f, 13g, 15g) et le profil en hauteur s'étendant le long du contour extérieur.

**16.** Dispositif réceptacle selon la revendication 14, les au moins deux surfaces d'identification (20a, 22a ; 20b, 21b, 22b, 23b, 24b, 25b ; 20c, 22c ; 21c, 23c ; 20f, 21f ; 20g, 21g) étant mutuellement adjacentes et/ou étant placées en étant écartées l'une de l'autre le long du profil en hauteur, de manière particulièrement préférentielle, le long de la ligne.

**17.** Dispositif réceptacle selon la revendication 14 ou 16, au moins l'une des au moins deux surfaces d'identification présentant notamment une longueur le long de la ligne d'environ 1 mm à environ 10 mm, de préférence, d'environ de 2 à 8 mm, de manière plus préférentielle, d'environ 3 à 6 mm.

**18.** Dispositif réceptacle selon l'une quelconque des revendications 14 ou 16 à 17, le profil en hauteur comportant au moins deux surfaces d'identification (20b, 21b ; 20g, 21g) qui présentent chacune une longueur différente le long de la ligne.

**19.** Dispositif réceptacle selon l'une quelconque des revendications 14 ou 18, au moins l'une des au moins deux surfaces d'identification présentant à la transversale de la ligne une largeur d'environ 1 mm à environ 10 mm, de préférence d'environ 2 à 8 mm, de manière plus préférentielle d'environ 3 à 5 mm.

**20.** Dispositif réceptacle selon l'une quelconque des revendications 14 ou 16 à 19, au moins une, de préférence chacune de l'au moins une surface d'identification étant carrée, de préférence rectangulaire.

**21.** Dispositif réceptacle selon l'une quelconque des revendications 14 ou 16 à 20, le profil en hauteur comportant au moins une arête de détection qui est respectivement adjacente à une surface d'identification (28c, 28d, 28e, 28f, 28g) et qui est formée de préférence entre la surface d'identification et chaque fois une surface de liaison orthogonale par rapport à la surface d'identification.

22. Dispositif réceptacle selon la revendication 21, l'arête étant placée sensiblement de manière orthogonale par rapport à l'extension en longueur le long de la ligne, le long de laquelle le profil en hauteur est détecté.

23. Dispositif réceptacle selon l'une quelconque des revendications 21 ou 22, deux surfaces d'identification étant adjacentes à des côtés de préférence opposés d'une surface de liaison, les deux surfaces d'identification adjacentes à la surface de liaison présentant chacune des hauteurs différentes et en option, des longueurs et/ou largeurs différentes, la surface de liaison étant placée notamment le long de la ligne, entre les deux surfaces d'identification.

24. Dispositif réceptacle selon l'une quelconque des revendications 14 à 23, le profil en hauteur étant sensiblement symétrique, de préférence en symétrie spéculaire ou en symétrie ponctuelle par rapport à un plan de symétrie en direction orthogonale par rapport à la ligne qui s'étend notamment le long du contour extérieur du dispositif réceptacle.

25. Dispositif réceptacle selon l'une quelconque des revendications 14 à 23, le profil en hauteur étant conçu de manière non symétrique, de préférence pas en symétrie spéculaire ou pas en symétrie ponctuelle.

26. Dispositif réceptacle selon la revendication 24, des deux côtés d'un plan qui est sensiblement orthogonal à la ligne le long de laquelle le profil en hauteur est détecté, les surfaces d'identification (20f, 21f ; 20g, 21g) présentant une largeur différente.

27. Dispositif réceptacle selon la revendication 25, des deux côtés d'un plan qui est sensiblement orthogonal à la ligne le long de laquelle le profil en hauteur est détecté, les surfaces d'identification (20f, 21f ; 20g, 21g) présentant une longueur et/ou hauteur différente(s) et en option, en supplément une largeur différente.

28. Dispositif réceptacle selon l'une quelconque des revendications 14 à 27, le dispositif réceptacle présentant un contour extérieur avec au moins deux côtés mutuellement opposés (13a, 15a, 13b, 15b, 13c, 13d, 15d, 13e, 15e, 13f, 15f, 13g, 15g), les côtés mutuellement opposés comprenant chacun un premier ou deuxième élément d'identification qui sont conçus de préférence en symétrie axiale réciproque autour d'un axe médian du dispositif réceptacle.

29. Dispositif réceptacle selon l'une quelconque des revendications 14 à 28, le dispositif réceptacle présentant un côté supérieur à partir duquel le matériel à réceptionner est repris hors du dispositif réceptacle, à la parallèle d'un axe médian (M) ou délivré dans le dispositif réceptacle, le profil en hauteur étant placé de telle sorte qu'une mesure de hauteur du profil en hauteur soit réalisable à partir de l'extérieur.

30. Dispositif réceptacle selon la revendication 29, au moins l'une des surfaces d'identification, de préférence toutes les surfaces d'identification étant placée(s) de manière orthogonale par rapport à l'axe médian (M).

31. Dispositif réceptacle selon l'une quelconque des revendications 14 à 30, au moins l'une des surfaces d'identification (20b, 20d, 20e, 20f) présentant au moins sensiblement la même hauteur qu'une arête supérieure du dispositif réceptacle.

32. Dispositif réceptacle selon l'une quelconque des revendications 14 à 31, le matériel qui doit être réceptionné par le dispositif réceptacle étant choisi dans le groupe comprenant le matériel consommable, comme par exemple un contenant de traitement ou un embout de pipette jetable ; ou une pièce d'appareil à protéger d'un contact direct, comme par exemple un aimant pour agir sur un échantillon ; une matière utilisée pour le traitement, la purification et/ou l'analyse des molécules biologiques cibles, comme par exemple un liquide échantillon avec les molécules cibles, un mélange de lyse, un mélange de liaison, un mélange tampon, un mélange de lavage, un mélange d'élutions ou autres mélanges de traitement.

33. Dispositif réceptacle selon l'une quelconque des revendications 14 à 32, avec au moins un contenant réceptacle (3a, 3b, 3d, 3e, 3f, 3g) fermé sur une extrémité, pour réceptionner le matériel.

34. Dispositif réceptacle selon la revendication 33, l'au moins un contenant réceptacle présentant un volume de 8 μl à 7000 μl, de préférence de 10 μl à 5000 μl, de manière la plus préférentielle, de 15 μl à 3000 μl par contenant réceptacle.

35. Dispositif réceptacle selon l'une quelconque des revendications 33 ou 34, avec une pluralité de contenants réceptacles, de préférence 8 contenants réceptacles, les contenants réceptacles étant placés de préférence selon un disposition en matrice.

36. Dispositif réceptacle selon l'une quelconque des revendications 14 à 32, comportant au moins une zone de réception ouverte sur deux côtés, de préférence opposés, pour réceptionner le matériel.

**37.** Dispositif réceptacle selon l'une quelconque des revendications 14 à 36, avec au moins un passage (5a, 5b), de préférence au moins deux passages, pour faire passer un élément de levage d'un dispositif de transport (100), le ou les passages s'étendant de préférence à la parallèle de l'axe médian (M).

**38.** Dispositif réceptacle selon l'une quelconque des revendications 14 à 37, le dispositif réceptacle (1a, 1b) étant conformé pour un engagement de deux dispositifs réceptacles superposés, de sorte que deux des dispositifs réceptacles ou plus soient empilables dans des orientations prédéfinies, de préférence de telle sorte que des dispositifs réceptacles empilés présentent en commun une hauteur qui est inférieure à la somme des hauteurs individuelles des dispositifs réceptacles, les dispositifs réceptacles étant empilables de préférence de telle sorte que des passages respectifs de plusieurs dispositifs réceptacles empilés soient orientables les uns par rapport aux autres le long d'une ligne.

**39.** Dispositif réceptacle selon la revendication 38, le dispositif réceptacle présentant une hauteur d'empilage inférieure à 80% de la hauteur totale du dispositif réceptacle, la hauteur d'empilage étant de préférence inférieure à environ 50 mm et/ou supérieure à environ 5 mm, de manière plus préférentielle étant de 10 à 40 mm et de la manière la plus préférentielle, étant de 15 à 30 mm.

**40.** Appareil selon l'une quelconque des revendications 1 à 13, l'au moins un dispositif réceptacle étant conçu selon l'une quelconque des revendications 15 à 39.

**41.** Procédé destiné à inventorier, à déterminer la position et/ou à déterminer l'orientation de dispositifs réceptacles selon l'une quelconque des revendications 14 à 39, qui sont nécessaires pour le traitement automatisé d'un matériel qui contient des molécules biologiques cibles sur un appareil correspondant, lors duquel il est détecté au moins une valeur de hauteur d'une zone de détection du dispositif réceptacle concerné ; et à partir de la valeur de hauteur, il est déterminé une position dans l'espace et/ou une orientation et/ou un type et/ou la présence et/ou le nombre et/ou un état du dispositif réceptacle concerné sur l'appareil.

**42.** Procédé selon la revendication 41, lors duquel pour déterminer la position dans l'espace et/ou le type et/ou la présence et/ou le nombre et/ou l'état du dispositif réceptacle, il est procédé à une mesure à 1 point pour détecter la valeur de hauteur, la valeur ainsi obtenue est comparée avec des données fixées en conséquence précédemment, le résultat de la comparaison est utilisé pour piloter le déroulement du processus sur l'appareil et de préférence en option, une information est délivrée si le résultat obtenu lors de la mesure de la valeur de hauteur ne coïncide pas avec les données précédemment fixées.

**43.** Procédé selon la revendication 42, au moins deux valeurs de hauteur, notamment un profil en hauteur de la zone de détection étant détectées, les valeurs de hauteur obtenues à cet effet, notamment le profil en hauteur étant comparé avec des données précédemment fixées en conséquence, le résultat de la comparaison étant utilisé pour piloter le déroulement du processus sur l'appareil et de préférence une information étant délivrée si le résultat obtenu lors de la mesure des valeurs de hauteur, notamment le profil en hauteur obtenu ne coïncide pas avec les données précédemment fixées.

**44.** Procédé selon la revendication 43, au moins avant la détection du premier profil en hauteur, au moins un profil en hauteur d'ajustage étant détecté le long d'au moins une ligne d'ajustage.

**45.** Procédé selon la revendication 44, le profil en hauteur d'ajustage d'au moins une ligne d'ajustage qui se trouve en un endroit à l'intérieur de l'appareil auquel aucun dispositif réceptacle ne doit être décelé étant détecté et le profil en hauteur d'ajustage détecté étant utilisé en tant que base pour les mesures de hauteur suivantes.

**46.** Procédé selon la revendication 44, au moins un profil en hauteur étant détecté le long d'au moins une ligne d'ajustage qui à l'intérieur de l'appareil s'écoule à la perpendiculaire d'une première arête à position de consigne définie, au moins profil en hauteur étant détecté le long d'au moins une ligne d'ajustage qui à l'intérieur de l'appareil s'écoule à la perpendiculaire d'une deuxième arête à position de consigne définie, la première arête étant placée à angle droit de la deuxième arête, à partir des lignes en hauteur obtenues lors des mesures précédentes, les positions réelles des arêtes définies étant déterminées, les positions réelles des arêtes étant comparées avec leurs positions de consigne et l'information résultant de la comparaison entre les positions réelles et les positions de consigne des arêtes définies étant utilisée pour piloter le déroulement ultérieur du processus sur l'appareil.

**47.** Procédé selon la revendication 46, la première et/ou la deuxième arête(s) étant formée(s) par des bords d'un évidement ou estampage carré, de préférence rectangulaire.

**48.** Procédé selon la revendication 46 ou 47, lorsque la divergence entre les positions réelles et les positions de consigne des arêtes définies ne dépasse par une valeur précédemment déterminée, les positions réelles étant utilisées dans le déroulement du processus sur l'appareil pour la définition de la position d'autres éléments constitutifs ou matériels consommables de l'appareil.

**49.** Procédé selon l'une quelconque des revendications 46 à 48, un message d'erreur étant affiché en cas de dépassement d'une valeur précédemment déterminée par la divergence entre les positions réelles et les positions de consigne des arêtes définies.

**50.** Procédé selon l'une quelconque des revendications 41 à 49, au moins un profil en hauteur respectif étant détecté plusieurs fois le long de lignes mutuellement parallèles, les lignes étant déportées de préférence chaque fois latéralement les unes par rapport aux autres.

**51.** Procédé selon l'une quelconque des revendications 42 à 50, à partir d'une différence de hauteur entre l'au moins une valeur de hauteur détectée de la zone de détection du dispositif réceptacle et une hauteur de référence, un nombre de dispositifs réceptacles empilés étant déterminé.

**52.** Procédé selon l'une quelconque des revendications 42 à 51, le type et le nombre de dispositifs réceptacles empilés étant déterminés à l'aide de la formule suivants :

$$h_T = (n - 1) \times h_{so} + d,$$

$h_T$ étant la différence de hauteur entre l'au moins une valeur de hauteur détectée de la zone de détection avec le profil en hauteur d'un dispositif réceptacle et une hauteur de référence, n étant le nombre des dispositifs réceptacles empilés, $h_{so}$ étant la hauteur d'empilage entre deux dispositifs réceptacles empilés voisins et d étant une hauteur d'identification pour identifier le dispositif réceptacle.

**53.** Procédé selon l'une quelconque des revendications 42 à 52, au moins un dispositif réceptacle étant réceptionné par un dispositif de transport et l'au moins une valeur de hauteur de la zone de détection du dispositif réceptacle réceptionné étant détectée.

**54.** Procédé selon la revendication 53, un nombre et/ou un type de dispositifs réceptacles empilés étant déterminé(s) pendant que ces derniers sont réceptionnés par le dispositif de transport et de préférence un ou plusieurs des dispositifs réceptacles réceptionnés et détectés étant déposés par le dispositif de transport.

Fig. 1

Fig. 2a

Fig. 2b

Fig. 3a

Fig. 3b

Fig. 4a

Fig. 4b

Fig. 4c

Fig. 4d

1h ➔

9h

15h

Fig. 5

1i ➔

15i

20i

9i

3i

20i

11i

13i

Fig. 6

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- WO 2007039524 A
- EP 1288635 A2